(19) Europäisches Patentamt

European Patent Office

Office européen des brevets

(11) **EP 4 672 744 A1**

## (12) EUROPEAN PATENT APPLICATION

(43) Date of publication:
**31.12.2025 Bulletin 2026/01**

(21) Application number: **25174693.9**

(22) Date of filing: **07.05.2025**

(51) International Patent Classification (IPC):
*H04N 19/114* (2014.01)

(52) Cooperative Patent Classification (CPC):
**H04N 19/172; H04N 19/114; H04N 19/136;
H04N 19/177**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.06.2024 US 202418753360**

(71) Applicant: **INTEL Corporation**
**Santa Clara, CA 95054 (US)**

(72) Inventors:
• **Possos, Sebastian**
 **Sammamish, 98074 (US)**
• **Chiu, Yi-jen**
 **San Jose, 95129 (US)**
• **Zhang, Ximin**
 **San Jose, 95129 (US)**

(74) Representative: **Goddar, Heinz J.**
 **Boehmert & Boehmert**
 **Anwaltspartnerschaft mbB**
 **Pettenkoferstrasse 22**
 **80336 München (DE)**

## (54) ADAPTIVE GOP SIZE SELECTION

(57) Using a fixed group of pictures (GOP) size in video encoding significantly hinders compression efficiency due to its inability to adapt to the dynamic nature of video content. While encoding leverages spatio-temporal redundancy within a GOP for compression, a predetermined size fails to capture the varying complexity of scenes. This leads to wasted bits in low-motion segments and insufficient reference frame variation for high-motion areas, resulting in visual artifacts and reduced compression efficiency. To address this limitation, a GOP size recommendation engine involving machine learning models can determine frame-level GOP size recommendations based on pre-encoder frame statistics. The frame-level GOP size recommendations are used to adapt the GOP size for encoding video frames.

FIG. 8

EP 4 672 744 A1

**Description**

Background

Video compression is a technique for making video files smaller and easier to transmit over the Internet. There are different methods and algorithms for video compression, with different performance and tradeoffs. Video compression involves encoding and decoding. Encoding is the process of transforming (uncompressed) video data into a compressed format. Decoding is the process of restoring video data from the compressed format. An encoder-decoder system is called a codec.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates an encoding system and a plurality of decoding systems, according to some embodiments of the disclosure.
FIG. 2 illustrates an exemplary encoder to encode video frames and output an encoded bitstream, according to some embodiments of the disclosure.
FIG. 3 illustrates an exemplary decoder to decode an encoded bitstream and output a decoded video, according to some embodiments of the disclosure.
FIG. 4 illustrates an exemplary group of pictures (GOP) structure, according to some embodiments of the disclosure.
FIG. 5 illustrates video segments having different spatio-temporal characteristics, according to some embodiments of the disclosure.
FIG. 6 illustrates using different GOP sizes for different segments, according to some embodiments of the disclosure.
FIG. 7 illustrates an exemplary GOP size recommendation engine, according to some embodiments of the disclosure.
FIG. 8 illustrates an exemplary GOP size recommendation model, according to some embodiments of the disclosure.
FIG. 9 illustrates training the GOP size recommendation model, according to some embodiments of the disclosure.
FIG. 10 illustrates offline GOP size assignment, according to some embodiments of the disclosure.
FIG. 11 illustrates online GOP size assignment, according to some embodiments of the disclosure.
FIG. 12 illustrates an exemplary method for online GOP size assignment, according to some embodiments of the disclosure.
FIG. 13 illustrates a method for adaptively selecting GOP size, according to some embodiments of the disclosure.
FIG. 14 depicts a block diagram of an exemplary computing device, according to some embodiments of the disclosure.

Detailed Description

*Overview*

Video coding or video compression is the process of compressing video data for storage, transmission, and playback. Video compression may involve taking a large amount of raw video data and applying one or more compression techniques to reduce the amount of data needed to represent the video while maintaining an acceptable level of visual quality. In some cases, video compression can offer efficient storage and transmission of video content over limited bandwidth networks.

A video includes one or more (temporal) sequences of video frames or frames. A frame may include an image, or a single still image. A frame may have millions of pixels. For example, a frame for an uncompressed 4K video may have a resolution of 3840x2160 pixels. Pixels may have luma/luminance and chroma/chrominance values. The terms "frame" and "picture" may be used interchangeably. There are several frame types of picture types. I-frames or intra-frames may be least compressible and do not depend on other frames to decode. A frame may be labeled or specified as an intra-frame. I-frames may include scene change frames. A scene change frame may be a frame that captures a different scene from the scene captured in a previous frame. A scene change frame may have no to little correlation to the previous frame. An I-frame may be a reference frame for one or more other frames. P-frames may depend on data from previous frames to decode and may be more compressible than I-frames. A P-frame may be a reference frame for one or more other frames. B-frames may depend on data from previous and forward frames to decode and may be more compressible than I-frames and P-frames. A B-frame can refer to two or more frames, such as one frame in the future and one frame in the past. Other frame types may include reference B-frame and non-reference B-frame. Reference B-frame can act as a reference for another frame. A non-reference B-frame is not used as a reference for any frame. Reference B-frames are stored in a decoded picture buffer whereas a non-reference B-frame does not need to be stored in the decoded picture buffer. P-frames and B-frames may be referred to as inter-frames. The order or encoding hierarchy in which I-frames, P-frames, and B-frames are arranged may be referred to as a group of pictures or GOP.

A video may include one or more sequences. Sequences may be defined by their narrative or thematic unity. Video frames of a sequence may all contribute to the same story beat, action, or idea. The coherence in a sequence is semantic.

A video may include one or more shots. A shot includes video frames captured from one camera in a single, uninterrupted recording, or a single, uninterrupted rendering of the same scene. Video frames of a shot may share similar spatial and spatio-temporal characteristics. Video frames of a shot may be visually consistent with each other or has visual continuity. Shots may be separated by scene change video frames. In many cases, a sequence may include one or more shots.

A video may include one or more segments. A segment may include a plurality of video frames. Segments may be separated by a change in spatial and spatio-temporal characteristics.

Using a fixed GOP size in video encoding significantly hinders compression efficiency due to its inability to adapt to the dynamic nature of video content. While encoding leverages spatio-temporal redundancy within a GOP for compression, a predetermined size fails to capture the varying complexity of scenes. This leads to wasted bits in low-motion segments and insufficient reference frame variation for high-motion areas, resulting in visual artifacts and reduced compression efficiency.

Various embodiments described herein address the challenge of detecting static and moving segments within video sequences, enabling video encoders to adjust operating parameters for each segment, or each shot, optimizing picture group sizes and achieving significant bitrate reductions in segments or shots where fixed GOP sizes conflict with dynamic content.

To address this limitation, a GOP size recommendation engine involving a GOP size recommendation model can determine frame-level GOP size recommendations based on pre-encoder frame statistics. The GOP size recommendation model may include multiple machine learning models that generate GOP size recommendation votes. The frame-level GOP size recommendations are used by a GOP size assignment block to adapt the GOP size for encoding video frames.

A pre-encoder is normally included to extract spatial and spatio-temporal features of video frames to assist video encoders in mode selection and tool selections. The features are available in the encoding pipeline and can be readily used as part of the input features to the machine learning models of the GOP size recommendation model.

In some embodiments, the input features to the GOP size recommendation model includes features extracted for a current frame, and features extracted for one or more previous frames (frames immediately preceding the current frame). The input feature sets advantageously capture information that may reveal content evolution and behavioral trends.

In some embodiments, the GOP size recommendation model includes a plurality of machine learning models. The machine learning models may include decision trees as a random forest decision tree or a random forest classifier. A machine learning model, such as a decision tree may produce a GOP size recommendation vote. The GOP size recommendation vote may be selected from one of at least five possible GOP size recommendations (e.g., GOP 1, GOP 2, GOP 4, GOP 8, and GOP 16). Randomization may be induced in the machine learning models, such as the decision trees, so that the machine learning models can produce different decisions. The GOP size recommendation model may include a few dozen machine learning models to more than 100 machine learning models. The GOP size recommendation votes produced by the ensemble of machine learning models are accumulated or counted by a vote accumulator to form a histogram having a plurality of GOP size bins. The GOP size bin with the highest number of votes is the GOP size recommendation for the current frame. The count of the GOP size bin having the highest number of votes is used as a confidence level of the GOP size recommendation for the current frame. Advantageously, using many machine learning models with randomization mitigates overfitting of the GOP size recommendation model. A voting system can increase robustness of the GOP size recommendation.

In some embodiments, training data for the GOP size recommendation model can be produced using previously optimally encoded videos. Features can be extracted from the original video frames and GOP sizes used in producing the optimally encoded videos may be used as the training data for the GOP size recommendation model. Training data entries may be randomly fed to the GOP size recommendation model without temporal dependency between entries.

In some embodiments, GOP size recommendations for video frames of high delay video content may be determined and collected for, e.g., each shot, or each segment. A weighted averaging scheme can be applied to the GOP size recommendations to assign GOP sizes adaptively to different shots or different segments. GOP size recommendations associated with smaller GOP sizes may be weighted more heavily than GOP size recommendations associated with higher GOP sizes.

In some embodiments, GOP size recommendations for video frames of low delay video content may be received as they become available. A dynamically sized buffer can be used to maintain GOP size recommendations for video frames that have not been encoded yet. An on-the-fly assignment algorithm can be implemented to assign GOP sizes adaptively and signal the encoder. The on-the-fly algorithm may include GOP size completion handling, scene change handling, and GOP size recommendation variability handling.

*Video compression*

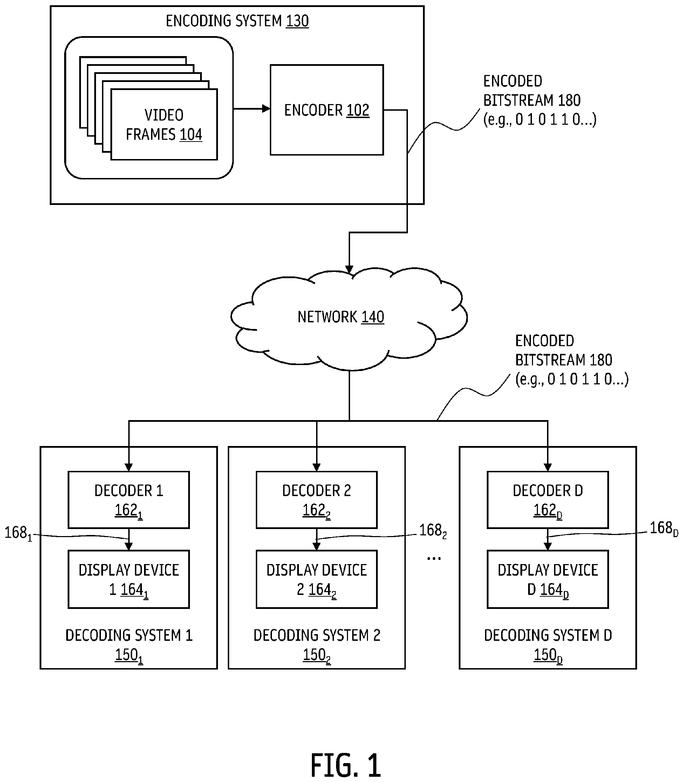

FIG. 1 illustrates encoding system 130 and one or more decoding systems $150_{1...D}$, according to some embodiments of the disclosure.

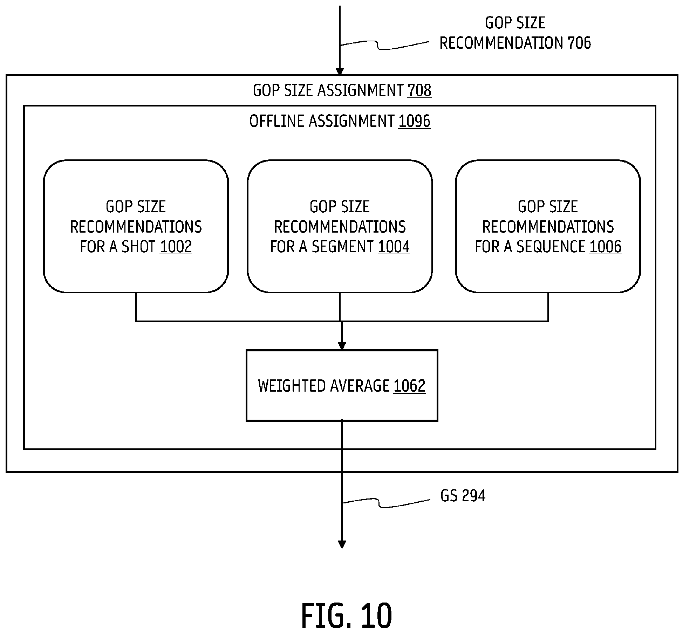

Encoding system 130 may be implemented on computing device 1400 of FIG. 10. Encoding system 130 can be implemented in the cloud or in a data center. Encoding system 130 can be implemented on a device that is used to capture the video. Encoding system 130 can be implemented on a standalone computing system. Encoding system 130 may perform the process of encoding in video compression. Encoding system 130 may receive a video (e.g., uncompressed video, original video, raw video, etc.) comprising a sequence of video frames 104. The video frames 104 may include image frames or images that make up the video. A video may have a frame rate or number of frames per second (FPS), that defines the number of frames per second of video. The higher the FPS, the more realistic and fluid the video looks. Typically, FPS is greater than 24 frames per second for a natural, realistic viewing experience to a human viewer. Examples of video may include a television episode, a movie, a short film, a short video (e.g., less than 15 seconds long), a video capturing gaming experience, computer screen content, video conferencing content, live event broadcast content, sports content, a surveillance video, a video shot using a mobile computing device (e.g., a smartphone), etc. In some cases, video may include a mix or combination of different types of video.

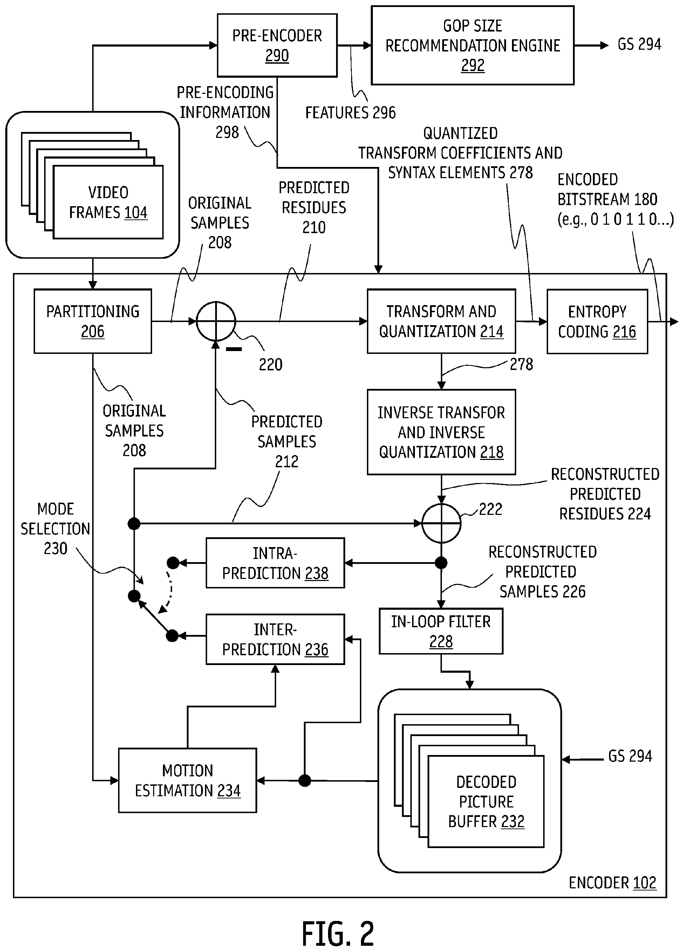

Encoding system 130 may include encoder 102 that receives video frames 104 and encodes video frames 104 into encoded bitstream 180. An exemplary implementation of encoder 102 is illustrated in FIG. 2. Encoding system 130 may include a pre-encoder. An exemplary pre-encoder 290 is illustrated in FIG. 2. Encoding system 130 may include a GOP size recommendation engine. An exemplary GOP size recommendation engine 292 is illustrated in FIG. 2. Implementation details relating to the GOP size recommendation engine are illustrated in FIG.

Encoded bitstream 180 may be compressed, meaning that encoded bitstream 180 may be smaller in size than video frames 104. Encoded bitstream 180 may include a series of bits, e.g., having 0's and 1's. Encoded bitstream 180 may have header information, payload information, and footer information, which may be encoded as bits in the bitstream. Header information may provide information about one or more of: the format of encoded bitstream 180, the encoding process implemented in encoder 102, the parameters of encoder 102, and metadata of encoded bitstream 180. For example, header information may include one or more of: resolution information, frame rate, aspect ratio, color space, etc. Payload information may include data representing content of video frames 104, such as samples frames, symbols, syntax elements, etc. For example, payload information may include bits that encode one or more of motion predictors, transform coefficients, prediction modes, and quantization levels of video frames 104. Footer information may indicate an end of the encoded bitstream 180. Footer information may include other information including one or more of: checksums, error correction codes, and signatures. Format of encoded bitstream 180 may vary depending on the specification of the encoding and decoding process, i.e., the codec.

Encoded bitstream 180 may include packets, where encoded video data and signaling information may be packetized. One exemplary format is the Open Bitstream Unit (OBU). An OBU may include a header and a payload. The header can include information about the OBU, such as information that indicates the type of OBU. Examples of OBU types may include sequence header OBU, frame header OBU, metadata OBU, temporal delimiter OBU, and tile group OBU. Payloads in OBUs may carry quantized transform coefficients and syntax elements that may be used in the decoder to properly decode the encoded video data to regenerate video frames.

Encoded bitstream 180 may be transmitted to one or more decoding systems $150_{1...D}$, via network 140. Network 140 may be the Internet. Network 140 may include one or more of: cellular data networks, wireless data networks, wired data networks, cable Internet networks, fiber optic networks, satellite Internet networks, etc.

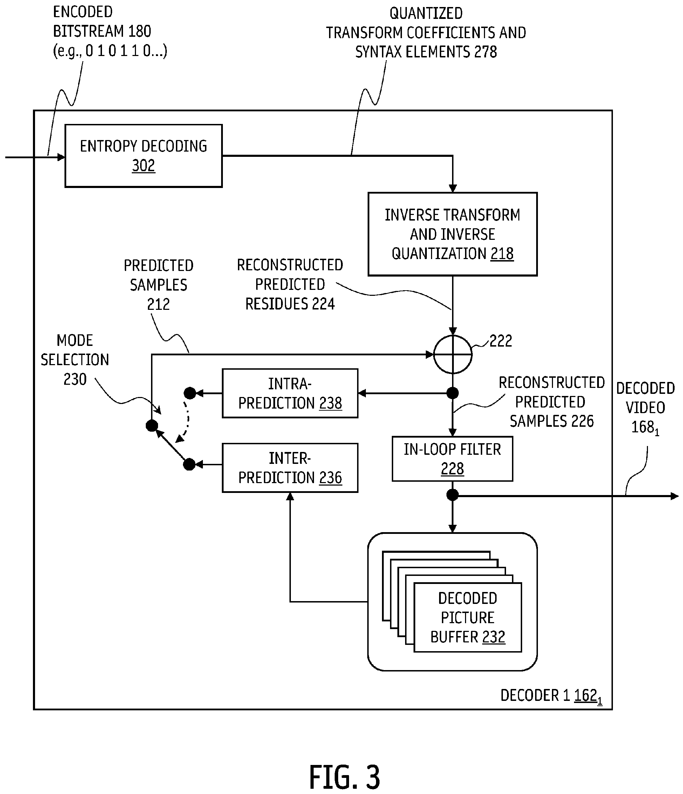

D number of decoding systems $150_{1...D}$ are illustrated. At least one of the decoding systems $150_{1...D}$ may be implemented on computing device 1400 of FIG. 10. Examples of systems $150_{1...D}$ may include personal computers, mobile computing devices, gaming devices, augmented reality devices, mixed reality devices, virtual reality devices, televisions, etc. Each one of decoding systems $150_{1...D}$ may perform the process of decoding in video compression. Each one of decoding systems $150_{1...D}$ may include a decoder (e.g., decoder 1...D $162_{1...D}$), and one or more display devices (e.g., display device 1...D $164_{1...D}$). An exemplary implementation of a decoder, e.g., decoder 1 $162_1$, is illustrated in FIG. 3.

For example, decoding system 1 $150_1$, may include decoder 1 $162_1$ and a display device 1 $164_1$. Decoder 1 $162_1$ may implement a decoding process of video compression. Decoder 1 $162_1$ may receive encoded bitstream 180 and produce decoded video $168_1$. Decoded video $168_1$ may include a series of video frames, which may be a version or reconstructed version of video frames 104 encoded by encoding system 130. Display device 1 $164_1$ may output the decoded video $168_1$ for display to one or more human viewers or users of decoding system 1 $150_1$.

For example, decoding system 2 $150_2$, may include decoder 2 $162_2$ and a display device 2 $164_2$. Decoder 2 $162_2$ may implement a decoding process of video compression. Decoder 2 $162_2$ may receive encoded bitstream 180 and produce decoded video $168_2$. Decoded video $168_2$ may include a series of video frames, which may be a version or reconstructed version of video frames 104 encoded by encoding system 130. Display device 2 $164_2$ may output the decoded video $168_2$ for display to one or more human viewers or users of decoding system 2 $150_2$.

For example, decoding system D $150_D$, may include decoder D $162_D$ and a display device D $164_D$. Decoder D $162_D$ may implement a decoding process of video compression. Decoder D $162_D$ may receive encoded bitstream 180 and produce decoded video $168_D$. Decoded video $168_D$ may include a series of video frames, which may be a version or reconstructed version of video frames 104 encoded by encoding system 130. Display device D $164_D$ may output the decoded video $168_D$ for display to one or more human viewers or users of decoding system D $150_D$.

*Video encoder*

FIG. 2 illustrates encoder 102 to encode video frames and output an encoded bitstream, according to some embodiments of the disclosure. Encoder 102 may include one or more of: signal processing operations and data processing operations, including inter and intra-prediction, transform, quantization, in-loop filtering, and entropy coding. Encoder 102 may include a reconstruction loop involving inverse quantization, and inverse transformation to guarantee that the decoder would see the same reference blocks and frames. Encoder 102 may receive video frames 104 and encodes video frames 104 into encoded bitstream 180. Encoder 102 may include one or more of partitioning 206, transform and quantization 214, inverse transform and inverse quantization 218, in-loop filter 228, motion estimation 234, inter-prediction 236, intra-prediction 238, and entropy coding 216.

Partitioning 206 may divide a frame in video frames 104 into blocks of pixels. Different codecs may allow different variable range of block sizes. In one codec, a frame may be partitioned by partitioning 206 into blocks of size 128x128 or 64x64 pixels. In some cases, a frame may be partitioned by partitioning 206 into blocks of 32x32 or 16x16 pixels. In some cases, a frame may be partitioned by partitioning 206 into blocks of 256x256 or 512x512 pixels.

Intra-prediction 238 may predict samples of a block or partition from reconstructed predicted samples of previously encoded spatial neighboring/reference blocks of the same frame. Intra-prediction 238 may receive reconstructed predicted samples 226 (of previously encoded spatial neighbor blocks of the same frame). Reconstructed predicted samples 226 may be generated by summer 222 from reconstructed predicted residues 224 and predicted samples 212. Intra-prediction 238 may determine a suitable predictor for predicting the samples from reconstructed predicted samples of previously encoded spatial neighboring/reference blocks of the same frame (thus making an intra-prediction decision). Intra-prediction 238 may generate predicted samples 212 generated using the suitable predictor. Intra-prediction 238 may output or identify the neighboring/reference block and a predictor used in generating the predicted samples 212. The identified neighboring/reference block and predictor may be encoded in the encoded bitstream 180 to enable a decoder to reconstruct a block using the same neighboring/reference block and predictor.

Motion estimation 234 and inter-prediction 236 may predict samples of a block from samples of previously encoded frames, e.g., reference frames in decoded picture buffer 232. Motion estimation 234 and inter-prediction 236 may perform motion compensation, which may involve identifying a suitable reference block and a suitable motion predictor (or vector) for a block and optionally an interpolation filter to be applied to the reference block. Motion estimation 234 may receive original samples 208 from partitioning 206. Motion estimation 234 may receive samples from decoded picture buffer 232 (e.g., samples of previously encoded frames or reference frames). Motion estimation 234 may use a number of reference frames for determining one or more suitable motion predictors. A motion predictor may include a reference block and a motion vector that can be applied to generate a motion compensated block or predicted block. Motion predictors may include motion vectors that capture the movement of blocks between frames in a video. Motion estimation 234 may output or identify one or more reference frames and one or more suitable motion predictors. Inter-prediction 236 may apply the one or more suitable motion predictors determined in motion estimation 234 and one or more reference frames to generate predicted samples 212. The identified reference frame(s) and motion predictor(s) may be encoded in the encoded bitstream 180 to enable a decoder to reconstruct a block using the same reference frame(s) and motion predictor(s).

Mode selection 230 may be informed by components such as motion estimation 234 to determine whether inter-prediction 236 or intra-prediction 238 may be more efficient for encoding a block (thus making an encoding decision). Inter-prediction 236 may output predicted samples 212 of a predicted block. Inter-prediction 236 may output a selected predictor and a selected interpolation filter (if applicable) that may be used to generate the predicted block. Intra-prediction 238 may output predicted samples 212 of a predicted block. Intra-prediction 238 may output a selected predictor and a selected interpolation filter (if applicable) that may be used to generate the predicted block. Regardless of the mode, predicted residues 210 may be generated by subtractor 220 by subtracting original samples 208 by predicted samples 212. In some cases, predicted residues 210 may include residual vectors from inter-prediction 236 and/or intra-prediction 238.

Transform and quantization 214 may receive predicted residues 210. Predicted residues 210 may be generated by subtractor 220 that takes original samples 208 and subtracts predicted samples 212 to output predicted residues 210. Predicted residues 210 may be referred to as prediction error of the intra-prediction 238 and inter-prediction 236 (e.g., error between the original samples and predicted samples 212). Prediction error has a smaller range of values than the original samples and can be coded with fewer bits in encoded bitstream 180. Transform and quantization 214 may include one or more of transforming and quantizing. Transforming may include converting the predicted residues 210 from the spatial domain to the frequency domain. Transforming may include applying one or more transform kernels. Transform and quantization 214 may output quantized transform coefficients and syntax elements 278 that indicate the coding modes and parameters used in the encoding process implemented in encoder 102.

Inverse transform and inverse quantization 218 may apply the inverse operations performed in transform and quantization 214 to produce reconstructed predicted residues 224 as part of a reconstruction path to produce decoded picture buffer 232 for encoder 102. Inverse transform and inverse quantization 218 may receive quantized transform coefficients and syntax elements 278. Inverse transform and inverse quantization 218 may perform one or more inverse quantization operations, e.g., applying an inverse quantization matrix, to obtain the unquantized/original transform coefficients. Inverse transform and inverse quantization 218 may perform one or more inverse transform operations, e.g., inverse transform (e.g., inverse discrete cosine transform, inverse discrete wavelet transform, etc.), to obtain reconstructed predicted residues 224. A reconstruction path is provided in encoder 102 to generate reference blocks and frames, which are stored in decoded picture buffer 232. The reference blocks and frames may match the blocks and frames to be generated in the decoder. The reference blocks and frames are used as reference blocks and frames by motion estimation 234, inter-prediction 236, and intra-prediction 238.

In-loop filter 228 may implement filters to smooth out artifacts introduced by the encoding process in encoder 102 (e.g., processing performed by partitioning 206 and transform and quantization 214). In-loop filter 228 may receive reconstructed predicted samples 226 from summer 222 and output frames to decoded picture buffer 232. Examples of in-loop filters may include constrained low-pass filter, directional deringing filter, edge-directed conditional replacement filter, loop restoration filter, Wiener filter, self-guided restoration filters, constrained directional enhancement filter (CDEF), Luma Mapping with Chroma Scaling (LMCS) filter, Sample Adaptive Offset (SAO) filter, Adaptive Loop Filter (ALF), cross-component ALF, low-pass filter, deblocking filter, etc. After applying the one or more (suitable) filters, in-loop filter 228 may write (filtered) reconstructed samples to a frame buffer such as decoded picture buffer 232.

Entropy coding 216 may receive quantized transform coefficients and syntax elements 278 (e.g., referred to herein as symbols) and perform entropy coding. Entropy coding 216 may generate and output encoded bitstream 180. Entropy coding 216 may exploit statistical redundancy and apply lossless algorithms to encode the symbols and produce a compressed bitstream, e.g., encoded bitstream 180. Entropy coding 216 may implement some version of arithmetic coding.

In some embodiments, encoder 102 may include pre-encoder 290 that preprocesses video frames 104 before encoder 102 performs the encoding process. Exemplary pre-encoder 290 can extract information, e.g., features or statistics, about video frames 104 that may assist encoder 102 in mode selection, coding tool selection, and/or quantization parameter determination. Exemplary pre-encoder 290 can output pre-encoding information 298 associated with individual video frames in video frames 104, and encoder 102 may utilize pre-encoding information 298 in in mode selection, coding tool selection, and/or quantization parameter determination.

At least part of the pre-encoding information 298 may be output as part of features 296 and provided as input to exemplary GOP size recommendation engine 292. In some cases, at least part of the pre-encoding information 298 may be used to produce one or more derived features and the one or more derived features can be provided as part of features 296 and provided as input to exemplary GOP size recommendation engine 292. Using the information that pre-encoder 290 produces and that encoder 102 uses as part of features 296 can be important because the information reflects encoder 102's proficiencies in handling different types of content and availability of different coding tools.

In some embodiments, exemplary pre-encoder 290 may operate on smaller scaled down images, e.g., 1/16th sized images having ¼ width and ¼ height.

Preferably, features 296 may include a wide range of dimensions and includes diverse information about video frames 104. In some embodiments, an array of 30 features describing the complexities and dynamics of a video sequence is used in features 296. Relying on multiple features is advantageous as individual ones might misinterpret localized events and fail to align accurately with encoder 102's abilities. These 30 features in features 296 can offer a comprehensive understanding of both the video's traits and the encoder's capabilities.

The following illustrates examples of features in features 296:

| Pre-encoder 290 extracted features: |
| --- |
| 1.     Bits per pixel (BPP). |
| 2.     Percentage intra-blocks per frame (ABF). |
| 3.     Percentage inter-blocks per frame (EBF). |
| 4.     Percentage skip blocks per frame (SBF). |
| 5.     Normalized average horizontal motion (AHM). |
| 6.     Normalized average vertical motion (AVM). |
| 7.     Normalized motion magnitude (MM). |

(continued)

| Pre-encoder 290 extracted features: | |
| --- | --- |
| 8. | Average Intra Sum of Absolute Differences (ASAD). |
| 9. | Average Inter Sum of Absolute Differences (ESAD). |
| **Derived features:** | |
| 10. | Normalized horizontal motion variance (HMV). |
| 11. | Normalized vertical motion variance (VMV). |
| 12. | Normalized motion magnitude variance (MMV). |
| 13. | ISAD variance (ISV). |
| 14. | ESAD variance (ESV). |
| 15. | Compensation rate (CR). |

| Spatio-temporal derived features: | |
| --- | --- |
| 16. | Absolute temporal BPP differential (BPPd). |
| 17. | Absolute temporal ABF differential (ABFd). |
| 18. | Absolute temporal ASAD differential (ASADd). |
| 19. | Absolute temporal EBF differential EBFd). |
| 20. | Absolute temporal SBF differential (SBFd). |
| 21. | Absolute temporal AHM differential (AHMd). |
| 22. | Absolute temporal AVM differential (AVMd). |
| 23. | Absolute temporal MM differential (MMd). |
| 24. | Absolute temporal ESAD differential (ESADd). |
| 25. | Absolute HMV differential (HMVd). |
| 26. | Absolute VMV differential (VMVd). |
| 27. | Absolute MMV differential (MMVd). |
| 28. | Absolute ISV differential (ISVd). |
| 29. | Absolute ESV differential (ESVd). |
| 30. | Absolute CR differential (CRd). |

Features 296 may describe both spatial and temporal characteristics within a video frame. Additionally, features 296 may encapsulate the broader behavior of the current scene. Among these, 9 features in features 296 (listed under "pre-encoder 290 extracted features" above) may be directly derived from internal calculations within pre-encoder 290, while the remaining 21 features (listed under "derived features" and "spatio-temporal derived features" above) can be derived from block level information per frame extracted from the previous features and comparisons between the current and previous frames features. These new differentials offer immediate temporal trends in content behavior, enabling the system to detect small variations that could potentially prompt a change in GOP size. Features 296 advantageously offer distinct insights into a sequence's evolution, depicting occurring events such as pans, zooms, motion levels, and inter-frame similarity, and encapsulating the dynamic changes in content. Features 296 can play a role in establishing a robust classification system for determining GOP size and intra-frame assignment.

In some embodiments, features 296 includes bits per pixel feature. Bits per pixel feature can provide a good estimation of the image spatial complexity over intra-frames, and good spatio-temporal complexity over inter-frames. An advantage of bits per pixel feature is its normalization concerning resolution. Phrased differently, the bits per pixel feature can be used across video frames at different resolutions.

In some embodiments, features 296 includes percentage intra-blocks per frame feature, percentage skip blocks per frame feature, and percentage skip blocks per frame feature. The percentages per block type features can indicate how much of the content is compensable (predicted from other references) and how much change is happening in the frame based on the number of intra-blocks needed.

In some embodiments, features 296 includes normalized average horizontal motion feature and/or normalized average vertical motion feature. An advantage of the normalized average horizontal motion feature and the normalized average vertical motion feature is that drops, or abrupt jumps can indicate a scene change.

In some embodiments, features 296 includes normalized average horizontal motion feature, normalized average vertical motion feature, and normalized motion magnitude feature. The normalized average horizontal motion feature, the normalized average vertical motion feature, and the normalized motion magnitude feature can offer insight into the extent of motion occurring within the video content, and aid in understanding the dynamic changes between frames. The features are valuable for assessing the degree of movement that can influence compression, prediction, and overall encoding process.

In some embodiments, features 296 includes absolute differential horizontal motion feature. Absolute differential horizontal motion feature can be calculated as the absolute difference between normalized average horizontal motion of consecutive frames. An advantage of the absolute differential horizontal motion feature is that it can help discriminate between scene changes and other substantial alterations within the scene.

In some embodiments, features 296 includes average intra sum of absolute differences feature. The average intra sum of absolute differences feature computes the mean (or average) sum of absolute differences between corresponding pixels or blocks within a single frame, specifically in regions that utilize intra-prediction. Intra-prediction employs information exclusively from the current frame to predict pixel values. The average intra sum of absolute differences feature can offer an average measure of the cumulative absolute discrepancies between predicted and actual pixel values within that frame, providing an indication of the average distortion or variation in pixel values when using intra-prediction for encoding.

In some embodiments, features 296 includes average inter sum of absolute differences feature. The average inter sum of absolute differences feature computes the mean (or average) sum of absolute differences between corresponding pixels or blocks in frames that leverage inter-prediction. Inter-prediction involves referencing information from past and/or future frames to predict pixel values. This average offers a measure of the cumulative absolute discrepancies between predicted and actual pixel values using inter-frame prediction. The average inter sum of absolute differences feature can provide an assessment of the average distortion or variation in pixel values when employing inter-prediction techniques during the encoding process.

In some embodiments, features 296 includes percentage of blocks per prediction type feature. An advantage of percentage of blocks per prediction type feature is that it can offer insight into how the encoder (e.g., encoder 102) adapts to various content changes, correlating with the observed changes in the video sequence.

In some embodiments, features 296 includes compression rate feature. Compression rate feature represents a measurement of intra and inter-prediction distortion. Compression rate feature can measure effectiveness of inter-frame prediction against intra-frame prediction by quantifying the ratio between the distortion or differences in pixel values. A higher compensation rate suggests that inter-prediction, utilizing information from previous and/or subsequent frames, yields lower distortion or differences compared to intra-prediction, which relies solely on information within the same frame. Compression rate feature can be calculated as follows:

$$rate = \frac{\sum_{i=0}^{n} inter\_pred\_dist(i)}{\sum_{i=0}^{n} intra\_pred\_dist(i)} \qquad \textbf{(eq. 1)}$$

A compensation rate greater than 1 implies that inter-prediction provides a better prediction result with less distortion compared to intra-prediction. This often signifies that utilizing inter-frame references for prediction offers a more efficient way to encode and predict pixel values, leading to potentially higher compression efficiency and better representation of the video content. On the other hand, a compensation rate lower than 1 indicates that intra-prediction might offer better accuracy or less distortion than inter-prediction in certain areas or frames of the video sequence. A compensation rate lower than 1 could suggest scenarios where relying on information solely within the same frame for prediction might yield better results compared to using information from neighboring frames. The compensation rate feature aids in evaluating and determining the optimal prediction strategy for encoding frames within a video sequence, offering insights into the efficiency and performance of different prediction techniques. When the encoder (e.g., encoder 102) determines the optimal rate distortion among prediction types, it computes and contrasts prediction distortion against encoding costs to decide the most suitable prediction type. The compression rate feature can reflect the inherent spatio-temporal complexity of the sequence as gauged by the encoder's capabilities. Different encoders can exhibit varying proficiency in handling specific motion types or magnitudes and excel differently in their intra-prediction tools. Consequently, the compression rate feature can offer valuable understandings into the holistic solution of the encoding process.

In some embodiments, features 296 includes one or more variance-based derived features (listed under "derived features" above). The variance-based derived features are derived from derived from the previously mentioned block-based features to quantify the variability or dispersion of specific characteristics within the scene. The variance-based features can quantify assesses the degree of change or fluctuation present across frames or regions within the video content. When applied to features like motion vectors or prediction error, the variance-based features assist in pinpointing areas displaying high or low levels of change. High variance signals the presence of regions with diverse dynamics, while low variance suggests stability in the analyzed feature across the frame. The variance-based features are helpful in detecting scene dynamics, identifying scene/cut changes, and spotting repeated or highly similar frames between others. The variance-based features provide a first-order approximation of which segments may warrant larger or smaller GOP sizes to optimize encoding efficiency.

In some embodiments, features 296 includes one or more spatio-temporal features (listed under "spatio-temporal derived features" above). The spatio-temporal features compute the absolute variation or change between consecutive frames for other features, offering temporal insights into scene and frame changes. The spatio-temporal features aid in accurately determining GOP size classifications by calculating the absolute difference value for each feature. The spatio-temporal features can be used to extract behavioral patterns over time.

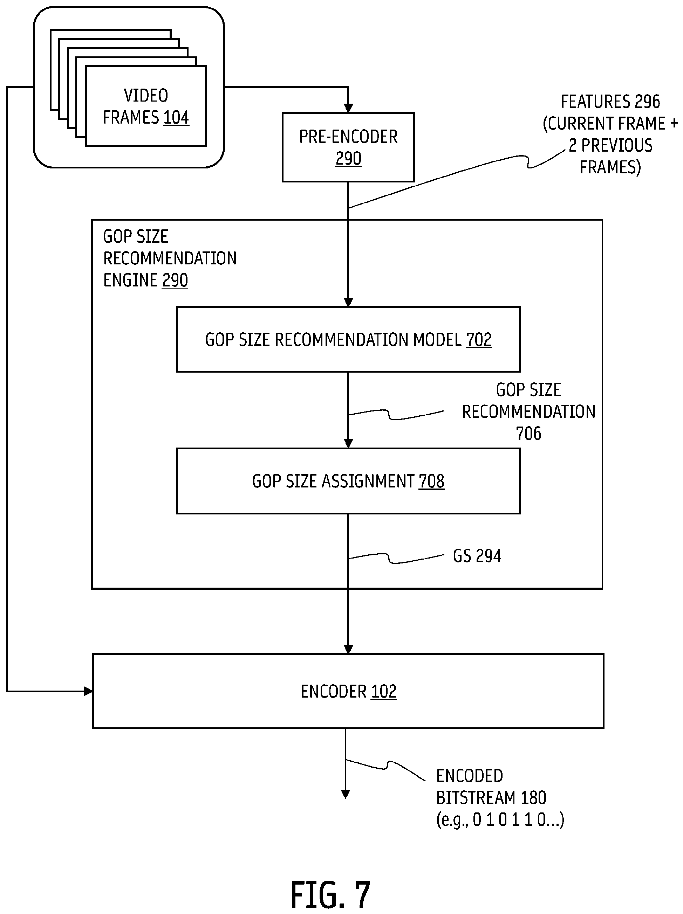

Features 296 can be used as input to exemplary GOP size recommendation engine 292. Exemplary GOP size recommendation engine 292 may output a GOP size signal, shown as GS 294. GS 294 may specify or signal information about the GOP structure for video frames 104 to be encoded by encoder 102. GS 294 may indicate to encoder 102 as to whether the encode a video frame in video frames 104 as an I-frame, a B-frame, or a P-frame. Therefore, GS 294 may be used to produce mode selection 230. GS 294 may be used to control which decoded versions of video frames 104 are to be stored in decoded picture buffer 232 (since reference frames are stored in decoded picture buffer 232). Details relating to exemplary GOP size recommendation engine 292 are described with FIGS. 7-11.

It is envisioned by the disclosure that other combinations of features may be used in features 296. Preferably, the features are based on features which exemplary pre-encoder 290 is already extracting to assist encoder 102. Preferably, the derived features can be calculated in a computationally efficient manner to avoid adding too much overhead.

*Video decoder*

FIG. 3 illustrates decoder 1 $162_1$ to decode an encoded bitstream and output a decoded video, according to some embodiments of the disclosure. Decoder 1 $162_1$ may include one or more of: signal processing operations and data processing operations, including entropy decoding, inverse transform, inverse quantization, inter and intra-prediction, in-loop filtering, etc. Decoder 1 $162_1$ may have signal and data processing operations that mirror the operations performed in the encoder. Decoder 1 $162_1$ may apply signal and data processing operations that are signaled in encoded bitstream 180 to reconstruct the video. Decoder 1 $162_1$ may receive encoded bitstream 180 and generate and output decoded video $168_1$ having a plurality of video frames. The decoded video $168_1$ may be provided to one or more display devices for display to one or more human viewers. Decoder 1 $162_1$ may include one or more of entropy decoding 302, inverse transform and inverse quantization 218, in-loop filter 228, inter-prediction 236, and intra-prediction 238. Some of the functionalities are previously described and used in the encoder, such as encoder 102 of FIG. 2.

Entropy decoding 302 may decode the encoded bitstream 180 and output symbols that were coded in the encoded bitstream 180. The symbols may include quantized transform coefficients and syntax elements 278. Entropy decoding 302 may reconstruct the symbols from the encoded bitstream 180.

Inverse transform and inverse quantization 218 may receive quantized transform coefficients and syntax elements 278 and perform operations which are performed in the encoder. Inverse transform and inverse quantization 218 may output reconstructed predicted residues 224. Summer 222 may receive reconstructed predicted residues 224 and predicted samples 212 and generate reconstructed predicted samples 226. Inverse transform and inverse quantization 218 may output syntax elements 278 having signaling information for informing/instructing/controlling operations in decoder 1 $162_1$ such as mode selection 230, intra-prediction 238, inter-prediction 236, and in-loop filter 228.

Depending on the prediction modes signaled in the encoded bitstream 180 (e.g., as syntax elements in quantized transform coefficients and syntax elements 278), intra-prediction 238 or inter-prediction 236 may be applied to generate predicted samples 212.

Summer 222 may sum predicted samples 212 of a decoded reference block and reconstructed predicted residues 224 to produce reconstructed predicted samples 226 of a reconstructed block. For intra-prediction 238, the decoded reference block may be in the same frame as the block that is being decoded or reconstructed. For inter-prediction 236, the decoded reference block may be in a different (reference) frame in decoded picture buffer 232.

Intra-prediction 238 may determine a reconstructed vector based on a residual vector and a selected vector predictor candidate. Intra-prediction 238 may apply a reconstructed predictor or vector (e.g., in accordance with signaled predictor information) to the reconstructed block, which may be generated using a decoded reference block of the same frame. Intra-prediction 238 may apply a suitable interpolation filter type (e.g., in accordance with signaled interpolation filter information) to the reconstructed block to generate predicted samples 212.

Inter-prediction 236 may determine a reconstructed vector based on a residual vector and a selected vector predictor candidate. Inter-prediction 236 may apply a reconstructed predictor or vector (e.g., in accordance with signaled predictor information) to a reconstructed block, which may be generated using a decoded reference block of a different frame from decoded picture buffer 232. Inter-prediction 236 may apply a suitable interpolation filter type (e.g., in accordance with signaled interpolation filter information) to the reconstructed block to generate predicted samples 212.

In-loop filter 228 may receive reconstructed predicted samples 226. In-loop filter 228 may apply one or more filters signaled in the encoded bitstream 180 to the reconstructed predicted samples 226. In-loop filter 228 may output decoded video $168_1$.

*Understand group of pictures and its impact on encoding performance*

A video includes continuous frames that can capture macro and micro events over a specific period of time. Macro and micro events are characterized by correlated variations between consecutive frames. For instance, a macro event might involve a camera pan that encompasses motion across the entire frame, while a micro event could be the nuanced facial movements of a news anchor during a broadcast. A video can include both macro and micro events. Adaptive encoding can enhance compression efficiency by identifying segments of the video that exhibit prolonged stability or minimal changes. It predicts and minimizes errors in segments with compensable alterations, as well as segments experiencing significant changes. Additionally, it addresses changes induced by fades and adjustments in brightness, requiring accurate identification and processing. Various embodiments described herein involve an adaptive video encoding scheme that adjusts the number of frames in a GOP, referred to herein as GOP size, based on the spatial and spatio-temporal properties of each segment.

A GOP structure comprises a sequence of consecutive frames encoded together, collectively forming a part of an encoded bitstream. The configuration of a GOP structure is determined by two values: the frequency of I-frames (intra-frame frequency) and the distance between P-frames. Intra-frame frequency refers to how often an intra-frame or I-frame is inserted into the stream. An intra-frame can be decoded independently without relying on information from other frames. In contrast, a P-frame (predictive frame) utilizes information from both past frames and itself for decoding. Within a GOP, I-frames act as key frames, starting point for decoding and initial reference, while P-frames serve as anchor reference frames, providing prediction references for the internal frames.

In low delay encoding scenarios, the P-frame distance remains at 1, indicating that each consecutive frame can potentially act as a reference. However, in high delay encoding, the reference frames are intentionally spaced apart in time. This spacing, known as the reference frame interval, can vary from 2 to 8, 16, or even 32 in more recent video compression standards.

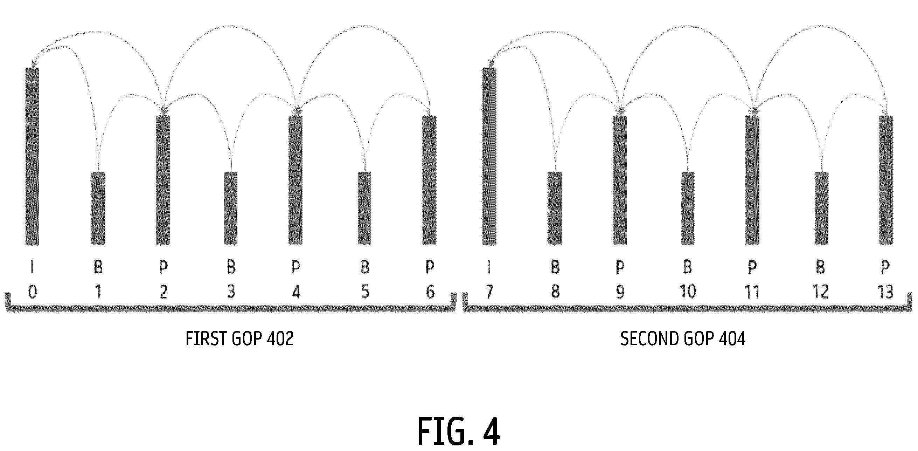

FIG. 4 illustrates an exemplary GOP structure, according to some embodiments of the disclosure. The illustrated GOP structure may be a high delay GOP structure (e.g., allowing reference frames to be more spaced apart). The video frames are encoded according to the (fixed) GOP structure. Two GOPs, first GOP 402 and second GOP 404, are depicted. The GOP structure specifies one B-frame between two reference frames. The GOP structure may be referred to as having a GOP size of 2, or GOP 2.

In some encoding solutions, the key frame frequency and P-frame distance are fixed parameters, configured prior to the encoding process and remaining constant throughout, unless manually reset. In contrast, various embodiments described herein takes an adaptive approach to I-frame and P-frame assignment, based on the spatial and spatio-temporal characteristics of video frames. After a pre-encode process (e.g., performed by pre-encoder 290 of FIG. 2) extracts multiple image/sequence spatial and temporal features from video frames, those features are given to a previously trained machine learning model to obtain the recommended GOP size. Frame-level recommendations can be collected, and a final GOP size may be assigned for encoding the video frames. The GOP size may dictate whether a video frame is to be encoded an I-frame, a P-frame, or a B-frame by the encoder (e.g., encoder 102 of FIG. 2).

I-frames, exclusively utilize spatial redundancies to compress data and Do not rely on information from other past or future frames for decoding. They are commonly employed to provide a clean start at specific intervals within the encoded stream. P-frames utilize both spatial and temporal redundancies to predict and compress image data. They draw data from past frames to identify temporal redundancies and, in conjunction with I-frames, serve as anchor pictures for B-frames. B-frames capitalize on spatial and temporal redundancies, leveraging temporal connections with frames from both past and future (hence the term 'bidirectional'). This picture type offers the highest compression level. The number of B-frames spread between anchor frames is directly managed by the P-distance value (referred to as the GOP size herein). When the visual content exhibits minimal changes between consecutive frames, increasing the number of B-frames (thus GOP size) proves viable. This is because predictions gathered from distant anchor frames remain relatively accurate, minimizing prediction errors.

However, when consecutive frames undergo significant changes, predictions based on distant anchor frames become less reliable, leading to more pronounced visual discrepancies. These discrepancies demand corrective measures, often in the form of additional encoded bits, to maintain a satisfactory level of visual fidelity.

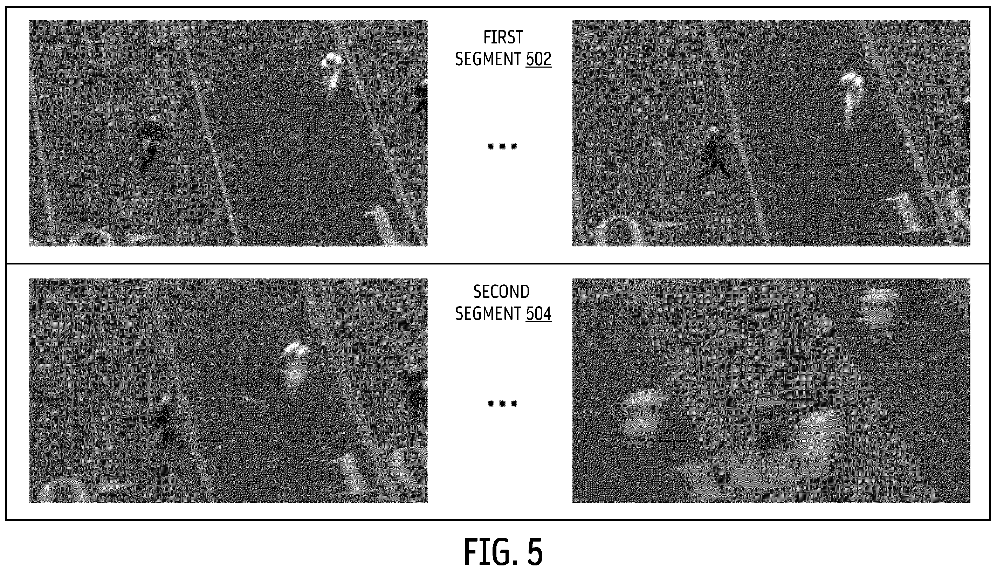

FIG. 5 illustrates video segments having different spatio-temporal characteristics, according to some embodiments of the disclosure. A video may include first segment 502 and second segment 504. First segment 502 may correspond to a first subscene. Second segment 504 may correspond to a second subscene. First segment 502 and second segment 504 may have different spatio-temporal characteristics.

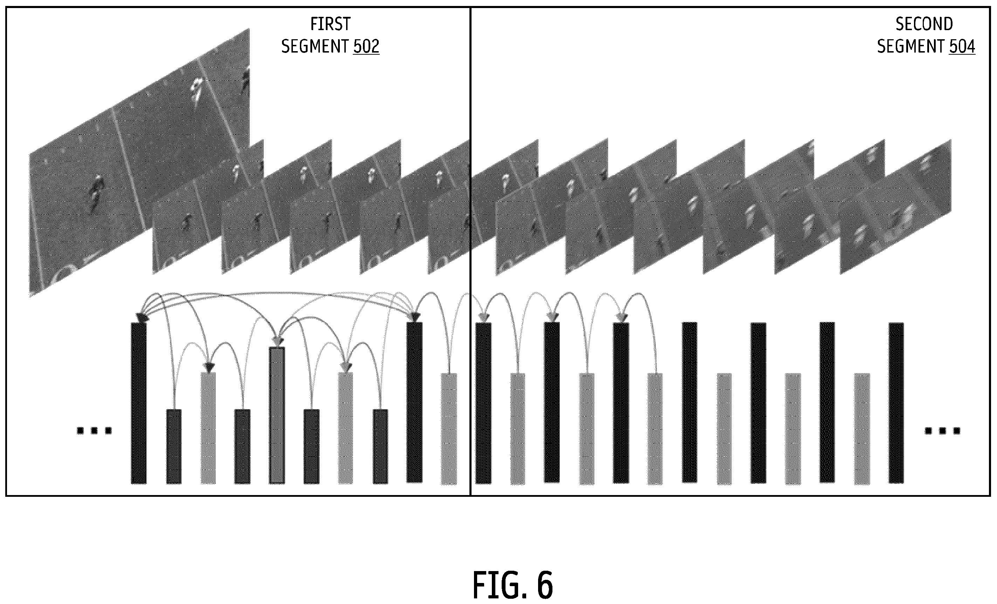

FIG. 6 illustrates using different GOP sizes for different segments, according to some embodiments of the disclosure. In first segment 502, characterized by a slowly changing background, a larger GOP size is permissible due to high frame redundancy. On the contrary, second segment 504 exhibits a significantly higher rate of change, a smaller GOP size may be needed to maintain quality and avoid prediction errors. Reference frames used to encode second segment 504 are less spaced out than reference frames used to encode first segment 502.

The video encoding process involves a set of tradeoffs between bitrate and coding error, where the final objective is to reach the best possible image quality between the constraints given by the required bandwidth and the channel configuration.

Various embodiments described herein can be used for block-based video standards, where knowing in advance how the content is changing will allow better selection of GOP size hence reducing the occurrence and magnitude of visual artifacts and propagation of them through the encoding process to following frames.

*Exemplary GOP size recommendation engine*

FIG. 7 illustrates exemplary GOP size recommendation engine 292, according to some embodiments of the disclosure.

Exemplary GOP size recommendation engine 292 may include GOP size recommendation model 702. GOP size recommendation model 702 receives features 296. GOP size recommendation model 702 may include a trained machine learning model. GOP size recommendation model 702 may receive features 296 associated with a video frame. GOP size recommendation model 702 may output GOP size recommendation 706 for the video frame in response to receiving features 296 associated with the video frame. GOP size recommendation model 702 may receive features 296 associated with a further video frame. GOP size recommendation model 702 may output GOP size recommendation 706 for the further video frame in response to receiving features 296 for the further video frame. GOP size recommendation 706 may be output on a frame-by-frame basis. GOP size recommendation 706 may include a GOP size decision or classification. GOP size recommendation 706 may include a confidence level associated with the GOP size recommendation 706.

First features associated with a first video frame (shown as features 296) may be input into GOP size recommendation model 702. In response to GOP size recommendation model 702 receiving the first features, GOP size recommendation model 702 may output a first GOP size recommendation and a first confidence level associated with the first GOP size recommendation (collectively shown as GOP size recommendation 706).

Second features associated with a second video frame (shown as features 296) may be input into GOP size recommendation model 702. The second video frame may immediately follow the first video frame in a temporal sense. In response to GOP size recommendation model 702 receiving the second features, GOP size recommendation model 702 may output a second GOP size recommendation and a second confidence level associated with the second GOP size recommendation (collectively shown as GOP size recommendation 706).

In some embodiments, first features associated with the first video frame in features 296 include features extracted from the first video frame (only). Second features associated with the second video frame in features 296 includes features extracted from the second video frame (only).

In some embodiments, first features include frame-features extracted from one or more additional video frames, and second features include frame-features extracted from one or more additional video frames. Phrased differently, input features provided to GOP size recommendation model 702 includes frame-features extracted for a video frame at time T, and frame-features extracted for a video frame at time T-1. Input features provided to GOP size recommendation model 702 may include frame-features extracted for a video frame at time T, frame-features extracted for a video frame at time T-1, and frame-features extracted for a video frame at time T-2. First features associated with the first video frame may include frame-features of the first video frame, and frame-features of a video frame that immediately precedes the first video frame. First features associated with the first video frame may include frame-features of the first video frame, and frame-features of two video frames that immediately precede the first video frame. Second features associated with the second video frame may include frame-features of the second video frame, and frame-features of a video frame that immediately precedes the second video frame. Second features associated with the second video frame may include frame-features of the second video frame, and frame-features of two video frames that immediately precede the second video frame.

Frame-features for a video frame are illustrated in examples described with FIG. 2 (e.g., having pre-encoder features and derived features). Suppose video frames 104 includes the following temporal sequence of video frames at different times and frame-features extracted from the respective video frames:

| Time 0 | Time 1 | Time 2 | Time 3 |
|---|---|---|---|
| Fourth video frame | Third video frame | First video frame | Second video frame |
| Third frame-features | Second frame-features | First frame-features | Fourth frame-features |

In some embodiments, the first features associated with the first video frame may include the first frame-features for the first video frame, and second frame-features for the third video frame. The third video frame immediately precedes the first video frame.

In some embodiments, the first features associated with the first video frame may include the first frame-features for the first video frame, second frame-features for the third video frame, and third frame-features for the fourth video frame. The fourth video frame immediately precedes the third video frame.

In some embodiments, the second features associated with the second video frame may include fourth frame-features extracted from the second video frame, and first frame-features for the first video frame. The first video frame immediately precedes the second video frame.

In some embodiments, the second features associated with the second video frame may include fourth frame-features extracted from the second video frame, first frame-features for the first video frame, and second frame-features for the third video frame. The third video frame immediately precedes the first video frame.

In some embodiments, 30 frame-features are extracted for each video frame, the first features may include 30 features extracted for the first video frame and 30 features extracted for a preceding frame to the first video frame. The first features may include 60 features. In some embodiments, 30 frame-features are extracted for each video frame, the second features may include 30 features extracted for the second video frame and 30 features extracted for a preceding frame to the second video frame. The second features may include 60 features.

In some embodiments, 30 frame-features are extracted for each video frame, the first features may include 30 features extracted for the first video frame and 60 features extracted for two preceding frames to the first video frame. The first features may include 90 features. In some embodiments, 30 frame-features are extracted for each video frame, the second features may include 30 features extracted for the second video frame and 60 features extracted for two preceding frames to the second video frame. The second features may include 90 features.

Frame-features may already include differentials-based features. By utilizing frame-features from additional video frames, the input feature set offers additional information for understanding how the content evolves and extrapolating behavioral trends within the input features.

Exemplary GOP size recommendation engine 292 may include GOP size assignment 708. GOP size assignment 708 may receive GOP size recommendation 706 for one or more video frames of video frames 104. In response to receiving GOP size recommendation 706 for the one or more video frames, GOP size assignment 708 may output GS 294 to signal encoder 102 on how to encode the one or more video frames of video frames 104. GOP size assignment 708 can produce a final GOP size to be used for encoding a particular segment. GOP size assignment 708 can produce a final GOP size to be used for encoding a particular shot. GOP size assignment 708 can produce a final GOP size to be used for encoding a particular sequence. GOP size assignment 708 can produce a final GOP size to be used for encoding a set of video frames. GOP size assignment 708 can produce a final GOP size to be used in low delay scenarios, on-the-fly, or online (where GOP size recommendations may not be known or available for all video frames). GOP size assignment 708 can produce a final GOP size to be used in high delay scenarios, or offline (where GOP size recommendations are known or available for all video frames). Exemplary implementations of GOP size assignment 708 are illustrated in FIGS. 10-12.

GOP size assignment 708 may determine a GOP size for encoding at least the first video frame and the second video frame based on the first GOP size recommendation, the first confidence level, the second GOP size recommendation, and the second confidence level. In some embodiments, the confidence levels are not used in determining the the final GOP size to be used for encoding the first video frame and the second video frame.

GS 294 may be used to signal the determined GOP size to encoder 102. Encoder 102 may encode at least the first video frame and the second video frame according to the GOP size (e.g., signaled in GS 294) to generate encoded bitstream 180.

GOP size recommendation 706 may specify a number of frames between two successive reference frames. The determined GOP size signaled by GS 294 may specify a number of frames between two successive reference frames.

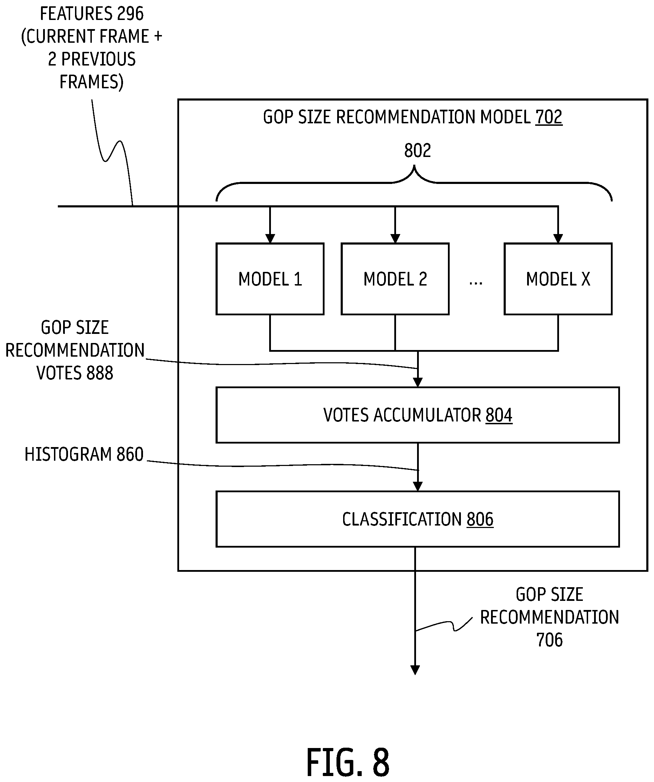

FIG. 8 illustrates exemplary GOP size recommendation model 702, according to some embodiments of the disclosure. While FIG. 7 illustrates one possible implementation of GOP size recommendation model 702, it is envisioned by the disclosure that other types of machine learning models may be used in GOP size recommendation model 702 to produce GOP size recommendation 706 on a frame-by-frame basis.

GOP size recommendation model 702 may include a plurality of models 802, which as model 1, model 2, ..., and model X. GOP size recommendation model 702 may include X number of models. X may equal to 10, 20, 45, 50, 90, 121, 200, etc. Each model in models 802 receives features 296. Each model in models 802 produces a GOP size recommendation vote, representing a prediction of the model given the features the model received. Each model may be a classifier that is able to produce a GOP size recommendation vote that selects one GOP size from K possible GOP sizes.

Each model can produce one of K possible GOP sizes as the GOP size recommendation vote. For example, K=5 and K possible GOP sizes may include {GOP 1, GOP 2, GOP 4, GOP 8, and GOP 16}. In some embodiments, each model is a decision tree. Each decision tree produces one of K potential GOP size recommendations as the GOP size recommendation vote. K may be 3, 4, 5, 6, 7, or 8.

In some embodiments, each model is a neural network. Each neural network produces one of K potential GOP size recommendations as the GOP size recommendation vote. K may be 3, 4, 5, 6, 7, or 8.

In some embodiments, each model is a support vector machine. Each support vector machine produces one of K potential GOP size recommendations as the GOP size recommendation vote. K may be 3, 4, 5, 6, 7, or 8.

Models 802 may process the first features associated with a first video frame. Models 802 may produce a plurality of first GOP size recommendation votes for the first video frame (shown as GOP size recommendation votes 888). Models 802 may process the second features associated with a second video frame. Models 802 may produce a plurality of second GOP size recommendation votes for the second video frame (shown as GOP size recommendation votes 888).

Models 802 are not identical to each other. Rather randomness and variations in hyperparameters of models 802 may be induced in models 802 so that first GOP size recommendation votes are not identical to each other, and second GOP size recommendation votes are not identical to each other.

GOP size recommendation model 702 may include votes accumulator 804. Votes accumulator 804 may accumulate the plurality of GOP size recommendation votes 888 produced by models 802 into GOP size bins. If each model produces one of K potential GOP size recommendations as the GOP size recommendation vote, votes accumulator 804 may accumulate GOP size recommendation votes 888 into K GOP size bins. Votes accumulator 804 may build histogram 860 having K GOP size bins based on GOP size recommendation votes 888.

GOP size recommendation model 702 may include classification 806. Classification 806 may receive histogram 860 from votes accumulator 804. Classification 806 may output a GOP size corresponding to a GOP size bin (of the histogram) with the highest number of GOP size recommendation votes as the GOP size recommendation 706 for a given video frame. Classification 806 may output a count corresponding to the GOP size bin (of the histogram) with the highest number of GOP size recommendation votes as the confidence level for a given video frame. In some cases, the count is represented by a proportion of votes in the GOP size bin over total number of votes. In some cases, the count is represented by a percentage of votes in the GOP size bin out of the total number of votes The confidence level may be a part of GOP size recommendation 706.

Votes accumulator 804 may accumulate the plurality of first GOP size recommendation votes produced by models 802 into GOP size bins for a first histogram. Classification 806 may output a GOP size corresponding to a GOP size bin (of the first histogram) with the highest number of GOP size recommendation votes as the first GOP size recommendation for the first video frame. Classification 806 may output a count corresponding to the GOP size bin (of the first histogram) with the highest number of GOP size recommendation votes as the first confidence level for the first video frame.

Votes accumulator 804 may accumulate the plurality of second GOP size recommendation votes produced by models 802 into GOP size bins for a second histogram. Classification 806 may output a GOP size corresponding to a GOP size bin (of the second histogram) with the highest number of GOP size recommendation votes as the second GOP size recommendation for the second video frame. Classification 806 may output a count corresponding to the GOP size bin (of the second histogram) with the highest number of GOP size recommendation votes as the second confidence level for the second video frame.

In some embodiments, GOP size recommendation model 702 is designed as a random forest model, where models 802 may include decision trees. Random forest models can accurately predict the optimal GOP size based on features 296, such as first features and second features. Random forest models advantageously utilize multiple decision trees and combine their votes for robust and accurate classifications or predictions. Random forest models excel at handling complex datasets (features 296 is highly dimensional), mitigating overfitting, and revealing valuable insights into feature importance within features 296. By consolidating the strengths of various decision trees, random forest models deliver reliable GOP size recommendation 706. Models 802 may implement random feature selection, where at each node of a decision tree, instead of considering all available features for splitting, models 802 selects a random subset of features. This random selection further increases the diversity of the trees and reduces the correlation between them.

In some embodiments, GOP size recommendation model 702 may implement one or more of: gradient boosting machines, adaptive boosting (AdaBoost), extra trees or extremely randomized trees, ensemble of neural networks, ensemble of support vector machines, random subspace method, stacking, isolation forests, decision jungle, oblique random forests, and Mondrian forests.

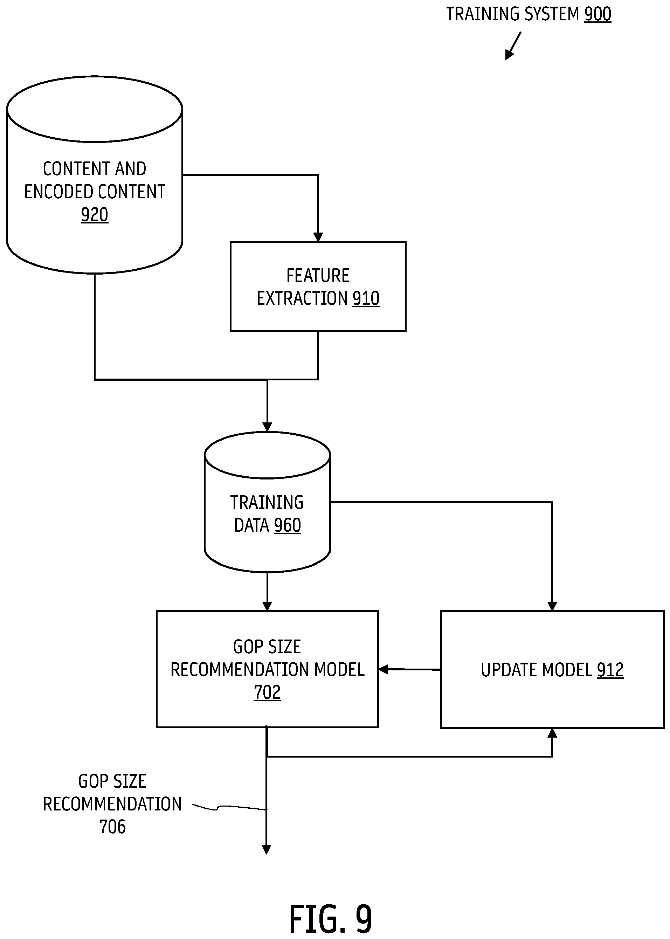

FIG. 9 illustrates training GOP size recommendation model 702, according to some embodiments of the disclosure. Training system 900 may include content and encoded content 920, feature extraction 910, training data 960, GOP size recommendation model 702, and update model 912.

Content and encoded content 920 may include (original) video frames and encoded versions of the video frames. Content 920 may include a diverse library of content having various resolutions, framerates, and scene cuts. The encoded versions of the video frames may be optimally encoded. The encoded versions of the video frames may include ground truth information, such as GOP size used at specific frames. GOP size used at specific frames may form the expected output of a training data entry.

Feature extraction 910 may extract features that correspond to features 296 of FIGS. 2 and 7-8. Feature extraction 910 may use the same algorithms used in pre-encoder 290 seen in FIGS. 2 and 7-8 to extract features for a given (original) video frame. Feature extraction 910 may compute derived features based on the features extracted for the video frame. Feature extraction 910 may produce frame-features for a given video frame. Frame-features for a video frame and optionally frame-features for one or more additional video frames (e.g., preceding frames) can form the input of a training data entry.

Training data entries each having an input and an expected output may be stored in training data 960. Training data entries may be randomized and grouped into batches. A portion of the training data entries may be held out for model evaluation.

Before training, one or more hyperparameters may be chosen. For example, the number of decision trees and how large each decision tree can grow if GOP size recommendation model 702 employs a random forest model.

Update model 912 may evaluate the predictions generated by GOP size recommendation model 702 in response to receiving inputs of training data entries against the expected outputs. Update model 912 may quantify how well GOP size recommendation model 702's predictions match the expected outputs, and learnable parameters of GOP size recommendation model 702 may be updated accordingly.

Update model 912 may build each decision tree in the forest using random samples from training data 960, if GOP size recommendation model 702 employs a random forest model. Branches of decision trees may be built by growing branches (branches split on features) until maximum depth is reached. In some cases, update model 912 may use bootstrap aggregating, where multiple subsets of the training data by randomly sampling with replacement. This process, known as bootstrapping, ensures that each decision tree is trained on a different subset of the data, promoting diversity among the trees.

Update model 912 may test GOP size recommendation model 702 based on a validation dataset held out in training data 960 to determine whether training of GOP size recommendation model 702 is complete. The validation dataset allows update model 912 to assess the performance of GOP size recommendation model 702. GOP size recommendation model 702 may be considered as complete when one or more performance metrics are met by the performance of GOP size recommendation model 702.

*GOP size assignment based on frame-level GOP size recommendations*

FIG. 10 illustrates (offline) GOP size assignment, according to some embodiments of the disclosure. GOP size assignment 708 may include offline assignment 1096 that implements offline GOP size assignment based on GOP size recommendations produced for video frames of a video sequence (shown as GOP size recommendation 706). Offline assignment 1096 may be used in high delay applications such as streaming on-demand content.

Offline assignment 1096 includes weighted average 1062 to aggregate/combine GOP size recommendations for a plurality of video frames (shown as GOP size recommendation 706). Weighted average 1062 may determine a weighted average of GOP size recommendations and use the weighted average as the GOP size. The final GOP size assignment may be signaled in GS 294.

In some embodiments, weighted average 1062 produces a weighted average based on GOP size recommendations for a shot 1002. GOP size predictions for a shot 1002 may include frame-level GOP size recommendations generated for video frames of a shot. Shots may be identified by a process that analyzes video frames of a video and produce boundaries that separate different shots.

In some embodiments, weighted average 1062 produces a weighted average based on GOP size recommendations for a segment 1004. GOP size predictions for a segment 1004 may include frame-level GOP size recommendations generated for video frames of a segment. Segments may be identified by a process that breaks video frames of a video into multiple segments.

In some embodiments, weighted average 1062 produces a weighted average based on GOP size recommendations for a sequence 1006. GOP size predictions for a sequence 1006 may include frame-level GOP size recommendations generated for video frames of a sequence.

Weighted average 1062 may determine a weighted average of GOP size recommendations having at least the first GOP size recommendation (produced by GOP size recommendation model 702 based on the first features associated with the second video frame) and the second GOP size recommendation (produced by GOP size recommendation model 702 based on the second features associated with the second video frame). Weighted average 1062 may use the weighted average as the GOP size, which may be signaled in GS 294.

In some embodiments, GOP size recommendations corresponding to smaller GOP sizes are weighted higher than GOP size recommendations corresponding to larger GOP sizes when determining the weighted average. GOP size recommendations are not often small (e.g., GOP 1, GOP 2), and therefore may be a strong indicator that the final GOP size assignment should pay more attention to small GOP size recommendations.

In some embodiments, GOP size recommendations having higher confidence levels are weighted higher than GOP size recommendations having lower confidence levels when determining the weighted average. GOP size recommendations having a high confidence level may be a strong indicator that that the final GOP size assignment should pay more attention to those GOP size recommendations.

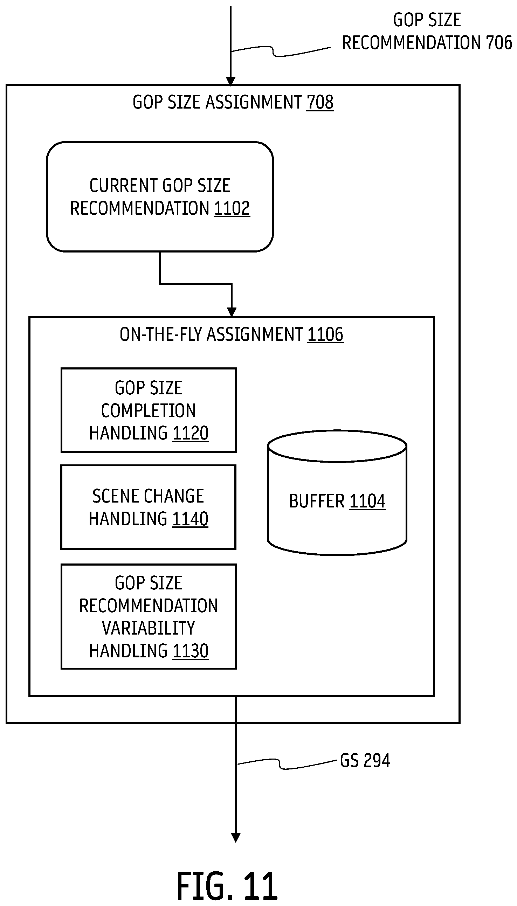

FIG. 11 illustrates (online) GOP size assignment, according to some embodiments of the disclosure. GOP size assignment 708 may include on-the-fly assignment 1106 that implements online GOP size assignment based on an incoming stream of GOP size recommendations (shown as GOP size recommendation 706) produced, e.g., one by one or a few at a time, for video frames of a video sequence. On-the-fly assignment 1106 may be used in low delay applications such as streaming live content. In some cases, on-the-fly assignment 1106 may be used in high delay applications.

On-the-fly assignment 1106 includes buffer 1104. Buffer 1104 may be a dynamically sized buffer. GOP size recommendations (and optionally confidence levels corresponding to the GOP size recommendations) may be stored in buffer 1104. Buffer 1104 can help maintain information about the GOP size recommendations for a set of video frames. The GOP size recommendations in buffer 1104 can be averaged (e.g., in a weighted manner as described with FIG. 10) to produce a GOP size assignment for the set of video frames. It may be natural to see GOP size recommendations fluctuate from frame to frame, and on-the-fly assignment 1106 can filter or smooth out the fluctuations to arrive at one or more suitable GOP size assignments for the set of video frames.

On-the-fly assignment 1106 can adjust the GOP size assignment in cases where there are insufficient frames. On-the-fly assignment 1106 can adjust the GOP size assignment in cases where there is a sudden change in GOP size recommendation that prevents meeting the adaptive GOP size assignment. On-the-fly assignment 1106 can determine whether to adjust the GOP size assignment when an incoming GOP size recommendation is relatively small. On-the-fly assignment 1106 can determine whether to adjust the GOP size assignment when an incoming GOP size recommendation is relatively large.

On-the-fly assignment 1106 may maintaining the first GOP size recommendation, the first confidence level, the second GOP size recommendation and the second confidence level in buffer 1104. On-the-fly assignment 1106 may receive current GOP size recommendation 1102 (and the confidence level corresponding to the current GOP size recommendation 1102) for a current video frame and add it to buffer 1104.

On-the-fly assignment 1106 can include GOP size completion handling 1120. When on-the-fly assignment 1106 detects that a GOP is complete (with the adaptive GOP size confirmed and all required frames available), on-the-fly assignment 1106 can pass the information to the encoder (e.g., via GS 294) to begin encoding the video frames in the GOP. In some embodiments, GOP size completion handling 1120 may, in response to determining that buffer 1104 has sufficient frames for the GOP size, signal the GOP size (e.g., GS 294) to an encoder and flush buffer 1104.

On-the-fly assignment 1106 can include scene change handling 1140. When on-the-fly assignment 1106 detects a scene change, on-the-fly assignment 1106 can pass the information to the encoder (e.g., via GS 294) to begin encoding the video frames in the GOP. In some embodiments, GOP size completion handling 1120 may, in response to determining that the second video frame is a scene change frame, updating the second GOP size recommendation to 1.

On-the-fly assignment 1106 may include GOP size recommendation variability handling 1130. When an incoming GOP size recommendation is relatively small, on-the-fly assignment 1106 can determine whether to adjust the GOP size assignment. When an incoming GOP size recommendation is relatively large, on-the-fly assignment 1106 can determine whether to adjust the GOP size assignment. GOP size recommendation variability handling 1130 may determine the GOP size based on one or more statistics determined based on the buffer. Statistics may include one or more of: a current average GOP size of the GOP size recommendations in buffer 1104, a current median GOP size recommendations in buffer 1104, a previous average GOP size of the GOP size recommendations in buffer 1104 (before the current GOP size recommendation was added to buffer 1104), a previous median GOP size recommendations in buffer 1104 (before the current GOP size recommendation was added to buffer 1104), a current average confidence level of confidence levels corresponding to GOP size recommendations in a GOP size bin, and a previous average confidence level of confidence levels corresponding to GOP size recommendations in a GOP size bin (before the current GOP size recommendation and its confidence level was added to buffer 1104).

GOP size recommendation variability handling 1130 can filter out any decision noise or blips, while allowing on-the-fly assignment 1106 to adapt to the variability of the GOP size recommendations of video frames. GOP size recommendation variability handling 1130 may detect that the incoming GOP size recommendation is relatively large compared to a tracked average GOP size in buffer 1104. In such a case, increasing the GOP assignment in response to a noisy, large GOP size recommendation may not necessarily benefit compression efficiency, and it may be preferable to allow the buffer 1104 to reach the GOP size and let a new GOP start fresh in the buffer 1104. GOP size recommendation variability handling 1130 may detect that the incoming GOP size recommendation is relatively small compared to a tracked average GOP size in buffer 1104. In such a case, changing the GOP size assignment to be a smaller GOP size in response to a noisy, small GOP size recommendation may hurt compression efficiency. GOP size recommendation variability handling 1130 may perform a check on the confidence level of the incoming GOP size recommendation to add a layer of stability and robustness to prevent frequent and unnecessary GOP size changes.

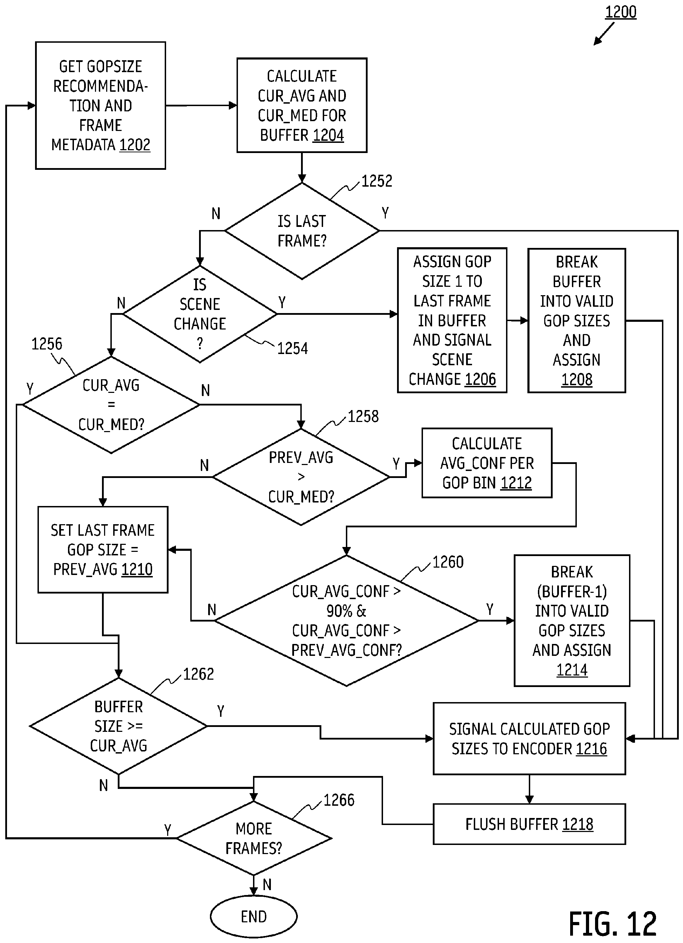

FIG. 12 illustrates exemplary method 1200 for online GOP size assignment, according to some embodiments of the disclosure. Exemplary method 1200 may be performed for video frames of a shot. Exemplary method 1200 may be performed for video frames of a segment. Exemplary method 1200 may be performed for video frames of a sequence. Exemplary method 1200 may be performed by on-the-fly assignment 1106 using buffer 1104 as illustrated in FIG. 11.

In 1202, GOP size recommendation and frame metadata for a current video frame may be obtained. GOP size recommendation may be produced by GOP size recommendation model 702 as seen in FIGS. 7-8.

In 1204, current average GOP size (CUR_AVG) of the GOP size recommendations in buffer 1104 may be calculated. Current median of the GOP size (CUR_MED) recommendations in buffer 1104 may be calculated.

In 1252, a check is performed to determine whether the current video frame is the last frame of the shot if exemplary method 1200 is performed for video frames of a shot. A check is performed to determine whether the current video frame is the last frame of the segment if exemplary method 1200 is performed for video frames of a segment. A check is performed to determine whether the current video frame is the last frame of the sequence if exemplary method 1200 is performed for video frames of a sequence. If YES, method 1200 proceeds to 1216. If NO, method 1200 proceeds to 1254.

In 1254, a check is performed to determine whether the current video frame is a scene change frame. This determination may be performed based on the frame metadata obtained in 1202. 1254 may be a part of scene change handling 1140 of FIG. 11. If YES, method 1200 proceeds to 1206. If NO, method 1200 proceeds to 1256.

In 1206, given the current video frame is a scene change frame, GOP size of 1 may be assigned to the last video frame in buffer 1104 (e.g., the current video frame). Scene change may be signaled to the encoder.

In 1208, one or more video frames in buffer 1104 may be broken into valid GOP sizes and the GOP sizes may be assigned to the one or more video frames in buffer 1104.

In 1216, determined or calculated GOP sizes may be signaled to the encoder.

In 1218, buffer 1104 may be flushed or emptied.

In 1266, a check is performed to determine if there are more frames. If YES, method 1200 returns to 1202. If NO, method 1200 ends.

In 1256, a check is performed to determine whether the current average GOP size is the same as the current median GOP size (determined in 1204). 1256 may be part of GOP size recommendation variability handling 1130 of FIG. 11. The check using these statistics of buffer 1104 can help determine whether the GOP size recommendation of the current video frame is more or less the same as the GOP size recommendations already in buffer 1104. If the current average GOP size is not the same as the current median GOP size, this means that the GOP size recommendation of the current video frame has a significant deviation from the GOP size recommendation(s) in buffer 1104. If the current average GOP size is = the same as the current median GOP size, this means that the GOP size recommendation of the current video frame is similar to the GOP size recommendation(s) in buffer 1104. If YES, method 1200 proceeds to 1262. If NO, method 1200 proceeds to 1258.

In 1262, a check is performed to determine whether the size of buffer 1104 is greater than or equal to the current average GOP size (CUR_AVG). 1261 may be part of GOP size completion handling 1120 of FIG. 11. This check can assess whether the GOP size is completed. The size of buffer 1104 being greater than or equal to the current average GOP size means the size of buffer 1104 has reached the current average GOP size or GOP is completed (corresponding to the YES). The size of buffer 1104 not being greater than or equal to the current average GOP size means the size of buffer 1104 has not reached the current average GOP size or GOP is not completed (corresponding to the NO). If YES, method 1200 proceeds to 1216. If NO, method 1200 proceeds to 1266.

In 1258, a check is performed to determine whether a previous average GOP size (PREV_AVG) is greater than the current median GOP size (CUR_MED). 1258 may be part of GOP size recommendation variability handling 1130 of FIG. 11. This check is performed after it has been determined in 1256 that the GOP size recommendation of the current frame deviates significantly from the GOP size recommendations in buffer 1104. This check helps to determine whether the GOP size recommendation of the current video frame is much larger than the previous average GOP size of GOP size recommendations in buffer 1104 before the GOP size recommendation for the current frame was added to buffer 1104 (corresponding to the NO result), or whether the GOP size recommendation of the current video frame is much smaller than the previous average GOP size of GOP size recommendations in buffer 1104 before the GOP size recommendation for the current frame was added to buffer 1104 (corresponding to the YES result). The handling of the two different scenarios is different. If YES, method 1200 proceeds to 1210. If NO, method 1200 proceeds to 1258.

In 1210, the GOP size recommendation for the last frame (e.g., the current video frame) is set to be the previous average GOP size (PREV_AVG). 1210 may be part of GOP size recommendation variability handling 1130 of FIG. 11. This operation in 1210 has the effect of resetting or disregarding the GOP size recommendation of the current video frame. The operation in 1210 may allow the completion of a GOP based on the previous GOP average, and later allow the next GOP to start fresh with a new average GOP size. 1210 may be performed when the GOP size recommendation for the current video frame is not a high confidence recommendation. 1210 may be performed when the GOP size recommendation for the current video frame is much larger than the average GOP size (e.g., following the NO path from 1258).

In 1212, average confidence level (AVG_CONF) may be calculated for confidence levels of GOP size recommendations in each GOP size bin (buffer 1104 may include GOP size recommendation(s) sorted by GOP size bins). 1212 may be part of GOP size recommendation variability handling 1130 of FIG. 11.

In 1260, a check is performed to determine whether the current average confidence level (CUR_AVG_CONF) for the GOP size bin to which the GOP size recommendation of the current frame belongs is greater than a confidence threshold (e.g., 90%) and whether the current average confidence level (CUR_AVG_CONF) for the GOP size bin to which the GOP size recommendation of the current frame belongs is greater than the previous average confidence level (PREV_AVG_CONF) for the GOP size bin to which the GOP size recommendation of the current frame belongs. 1260 may be part of GOP size recommendation variability handling 1130 of FIG. 11. The check in 1260 may be performed to prevent a decrease in GOP size when the GOP size recommendation of the current video frame is not a high confidence recommendation (e.g., the GOP size recommendation of the current frame is potentially a noisy GOP size recommendation). This check helps to determine whether the GOP size recommendation of the current frame signifies a relatively high confidence level prediction or a relatively low confidence level prediction for the current frame. CUR_AVG_CONF > confidence threshold and CUR_AVG_CONF > PREV_AVG_CONF are true (corresponding to the YES result) may indicate that the GOP size recommendation of the current frame signifies a relatively high confidence prediction. Otherwise (corresponding to the NO result), it may indicate that the GOP size recommendation of the current frame signifies a relatively low confidence prediction. If YES, method 1200 proceeds to 1214. If NO, method 1200 proceeds to 1210.

In 1214, buffer-1 (e.g., buffer 1104 without the current video frame added to it) may be broken into valid GOP sizes and the GOP sizes may be assigned to buffer-1.

## Exemplary method for assigning GOP sizes used in encoding

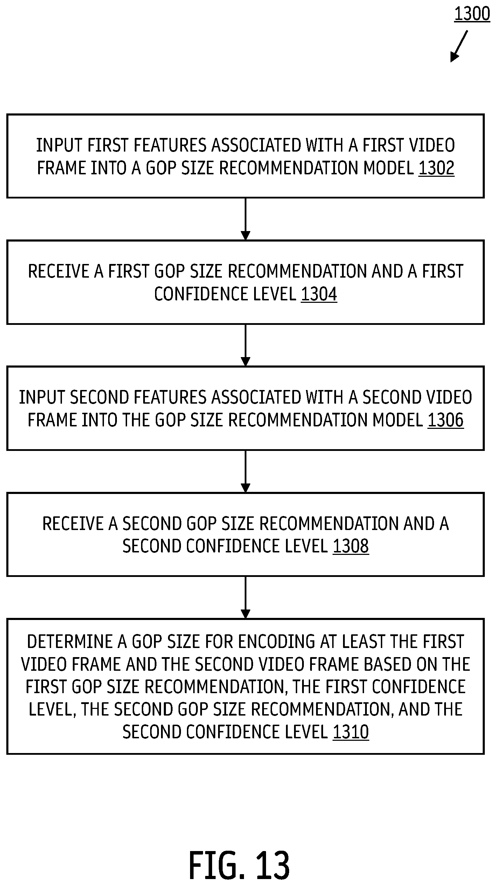

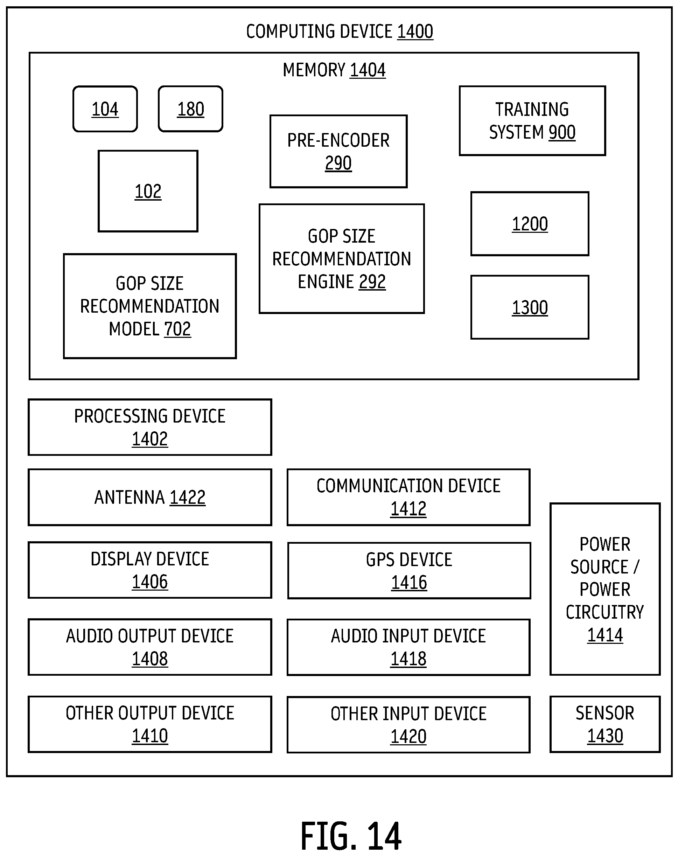

FIG. 13 illustrates method 1300 for adaptively selecting GOP size, according to some embodiments of the disclosure. Method 1300 may be encoded as instructions on memory 1404, which may be executed by processing device 1402 of computing device 1400 of FIG. 14. One or more operations of method 1300 may be executed by pre-encoder 290. One or more operations of method 1300 may be executed by exemplary GOP size recommendation engine 292. One or more operations of method 1300 may be executed by exemplary encoder 102.

In 1302, first features associated with a first video frame may be input into a GOP size recommendation model.

In 1304, in response to the GOP size recommendation model receiving the first features, a first GOP size recommendation and a first confidence level associated with the first GOP size recommendation may be received.

In 1306, second features associated with a second video frame may be input into the GOP size recommendation model.

In 1308, in response to the GOP size recommendation model receiving the second features, a second GOP size recommendation and a second confidence level associated with the second GOP size recommendation may be received.

In 1310, a GOP size for encoding at least the first video frame and the second video frame may be determined based on the first GOP size recommendation, the first confidence level, the second GOP size recommendation, and the second confidence level.

## Exemplary computing device

FIG. 14 is a block diagram of an apparatus or a system, e.g., an exemplary computing device 1400, according to some embodiments of the disclosure. One or more computing devices 1400 may be used to implement the functionalities described with the FIGS. and herein. A number of components are illustrated in FIG. 14 can be included in the computing device 1400, but any one or more of these components may be omitted or duplicated, as suitable for the application. In some embodiments, some or all of the components included in the computing device 1400 may be attached to one or more motherboards. In some embodiments, some or all of these components are fabricated onto a single system on a chip (SoC) die. Additionally, in various embodiments, the computing device 1400 may not include one or more of the components illustrated in FIG. 14, and the computing device 1400 may include interface circuitry for coupling to the one or more components. For example, the computing device 1400 may not include a display device 1406, and may include display device interface circuitry (e.g., a connector and driver circuitry) to which a display device 1406 may be coupled. In another set of examples, the computing device 1400 may not include an audio input device 1418 or an audio output device 1408 and may include audio input or output device interface circuitry (e.g., connectors and supporting circuitry) to which an audio input device 1418 or audio output device 1408 may be coupled.

The computing device 1400 may include a processing device 1402 (e.g., one or more processing devices, one or more of the same type of processing device, one or more of different types of processing device). The processing device 1402 may include processing circuitry or electronic circuitry that process electronic data from data storage elements (e.g., registers, memory, resistors, capacitors, quantum bit cells) to transform that electronic data into other electronic data that may be stored in registers and/or memory. Examples of processing device 1402 may include a CPU, a GPU, a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1400 may include a memory 1404, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1404 includes one or more non-transitory computer-readable storage media. In some embodiments, memory 1404 may include memory that shares a die with the processing device 1402.

In some embodiments, memory 1404 includes one or more non-transitory computer-readable media storing instructions executable to perform operations described herein, such as operations illustrated in FIGS. 7-13. In some embodiments, memory 1404 includes one or more non-transitory computer-readable media storing instructions executable to perform one or more operations of methods described herein, such as method 1200 and method 1300. In some embodiments, memory 1404 includes one or more non-transitory computer-readable media storing instructions executable to perform one or more operations of encoder 102. In some embodiments, memory 1404 includes one or more non-transitory computer-readable media storing instructions executable to perform one or more operations of pre-encoder 290. In some embodiments, memory 1404 includes one or more non-transitory computer-readable media storing instructions executable to perform one or more operations of GOP size recommendation model 702. In some embodiments, memory 1404 includes one or more non-transitory computer-readable media storing instructions executable to perform one or more operations of training system 900. The instructions stored in memory 1404 may be executed by processing device 1402.

In some embodiments, memory 1404 may store data, e.g., data structures, binary data, bits, metadata, files, blobs, etc., as described with the FIGS. and herein. Memory 1404 may include one or more non-transitory computer-readable media storing one or more of: input frames to the encoder (e.g., video frames 104), intermediate data structures computed by the encoder, bitstream generated by the encoder (encoded bitstream 180), bitstream received by a decoder (encoded bitstream 180), intermediate data structures computed by the decoder, and reconstructed frames generated by the decoder. Memory 1404 may include one or more non-transitory computer-readable media storing one or more of: data received and/or data generated by pre-encoder 290. Memory 1404 may include one or more non-transitory computer-readable media storing one or more of: data received and/or data generated by exemplary GOP size recommendation engine 292. Memory 1404 may include one or more non-transitory computer-readable media storing one or more of data used in training system 900.

In some embodiments, memory 1404 may store one or more machine learning models (or parts thereof). An example of a machine learning model includes GOP size recommendation model 702. Memory 1404 may store training data for training a machine learning model, e.g., training data 960 of FIG. 9. Memory 1404 may store instructions that perform operations associated with training a machine learning model, e.g., GOP size recommendation model 702. Memory 1404 may store input data, output data, intermediate outputs, intermediate inputs of one or more machine learning models, e.g., GOP size recommendation model 702. Memory 1404 may store one or more parameters used by the one or more machine learning models, e.g., GOP size recommendation model 702. Memory 1404 may store information that encodes how nodes or parts of the one or more machine learning models (e.g., GOP size recommendation model 702) are connected with each other. Memory 1404 may store instructions (e.g., low-level machine code) to perform one or more operations of the one or more machine learning models e.g., GOP size recommendation model 702. Memory 1404 may store a model definition that specifies one or more operations of a machine learning model e.g., GOP size recommendation model 702.

In some embodiments, the computing device 1400 may include a communication device 1412 (e.g., one or more communication devices). For example, the communication device 1412 may be configured for managing wired and/or wireless communications for the transfer of data to and from the computing device 1400. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1412 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1412 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1412 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1412 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 4G, 4G, 5G, and beyond. The communication device 1412 may operate in accordance with other wireless protocols in other embodiments. The computing device 1400 may include an antenna 1422 to facilitate wireless communications and/or to receive other wireless communications (such as radio frequency transmissions). Computing device 1400 may include receiver circuits and/or transmitter circuits. In some embodiments, the communication device 1412 may manage wired communications, such as electrical, optical, or any other suitable communication protocols (e.g., the Ethernet). As noted above, the communication device 1412 may include multiple communication chips. For instance, a first communication device 1412 may be dedicated to shorter-range wireless communications such as Wi-Fi or Bluetooth, and a second communication device 1412 may be dedicated to longer-range wireless communications such as global positioning system (GPS), EDGE, GPRS, CDMA, WiMAX, LTE, EV-DO, or others. In some embodiments, a first communication device 1412 may be dedicated to wireless communications, and a second communication device 1412 may be dedicated to wired communications.

The computing device 1400 may include power source / power circuitry 1414. The power source / power circuitry 1414 may include one or more energy storage devices (e.g., batteries or capacitors) and/or circuitry for coupling components of the computing device 1400 to an energy source separate from the computing device 1400 (e.g., DC power, AC power, etc.).

The computing device 1400 may include a display device 1406 (or corresponding interface circuitry, as discussed above). The display device 1406 may include any visual indicators, such as a heads-up display, a computer monitor, a projector, a touchscreen display, a liquid crystal display (LCD), a light-emitting diode display, or a flat panel display, for example.

The computing device 1400 may include an audio output device 1408 (or corresponding interface circuitry, as discussed above). The audio output device 1408 may include any device that generates an audible indicator, such as speakers, headsets, or earbuds, for example.

The computing device 1400 may include an audio input device 1418 (or corresponding interface circuitry, as discussed above). The audio input device 1418 may include any device that generates a signal representative of a sound, such as microphones, microphone arrays, or digital instruments (e.g., instruments having a musical instrument digital interface (MIDI) output).

The computing device 1400 may include a GPS device 1416 (or corresponding interface circuitry, as discussed above). The GPS device 1416 may be in communication with a satellite-based system and may receive a location of the computing device 1400, as known in the art.

The computing device 1400 may include a sensor 1430 (or one or more sensors). The computing device 1400 may include corresponding interface circuitry, as discussed above). Sensor 1430 may sense physical phenomenon and translate the physical phenomenon into electrical signals that can be processed by, e.g., processing device 1402. Examples of sensor 1430 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1400 may include another output device 1410 (or corresponding interface circuitry, as discussed above). Examples of the other output device 1410 may include an audio codec, a video codec, a printer, a wired or wireless transmitter for providing information to other devices, haptic output device, gas output device, vibrational output device, lighting output device, home automation controller, or an additional storage device.

The computing device 1400 may include another input device 1420 (or corresponding interface circuitry, as discussed above). Examples of the other input device 1420 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1400 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1400 may be any other electronic device that processes data.

*Select examples*

Example 1 provides a method, including inputting first features associated with a first video frame into a GOP size recommendation model; in response to the GOP size recommendation model receiving the first features, receiving a first GOP size recommendation and a first confidence level associated with the first GOP size recommendation; inputting second features associated with a second video frame into the GOP size recommendation model; in response to the GOP size recommendation model receiving the second features, receiving a second GOP size recommendation and a second confidence level associated with the second GOP size recommendation; and determining a GOP size for encoding at least the first video frame and the second video frame based on the first GOP size recommendation, the first confidence level, the second GOP size recommendation, and the second confidence level.

Example 2 provides the method of example 1, further including signaling the GOP size to an encoder.

Example 3 provides the method of example 2, further including encoding, by the encoder, at least the first video frame and the second video frame according to the GOP size to generate an encoded bitstream.

Example 4 provides the method of any one of examples 1-3, where the first GOP size recommendation specifies a number of frames between two successive reference frames.

Example 5 provides the method of any one of examples 1-4, where the first features include first frame-features for the first video frame, and second frame-features for a third video frame that immediately precedes the first video frame.

Example 6 provides the method of example 5, where the first features further include third frame-features for a fourth video frame that immediately precedes the third video frame.

Example 7 provides the method of example 6, where the second features include fourth frame-features for the second video frame, and the first frame-features for the first video frame, the first video frame immediately preceding the second video frame.

Example 8 provides the method of example 7, where the second features further include the second frame-features for the third video frame.

Example 9 provides the method of any one of examples 1-8, further including processing, by a plurality of models, the first features, and outputting, by the plurality of models, a plurality of GOP size recommendation votes.

Example 10 provides the method of example 9, further including accumulating the plurality of GOP size recommendation votes into GOP size bins; and outputting a GOP size corresponding to a GOP size bin with a highest number of GOP size recommendation votes as the first GOP size recommendation.

Example 11 provides the method of example 10, further including outputting a count corresponding to the GOP size bin with the highest number of GOP size recommendation votes as the first confidence level.

Example 12 provides the method of any one of examples 9-11, where the plurality of models includes a plurality of decision trees, each decision tree producing one of at least five potential GOP size recommendations.

Example 13 provides the method of any one of examples 1-12, where determining the GOP size for encoding at least the first video frame and the second video frame includes determining a weighted average of GOP size recommendations having at least the first GOP size recommendation and the second GOP size recommendation; and using the weighted average as the GOP size.

Example 14 provides the method of example 13, where GOP size recommendations corresponding to smaller GOP sizes are weighted higher than GOP size recommendations corresponding to larger GOP sizes when determining the weighted average.

Example 15 provides the method of example 13 or 14, where GOP size recommendations having higher confidence levels are weighted higher than GOP size recommendations having lower confidence levels when determining the weighted average.

Example 16 provides the method of any one of examples 1-15, where determining the GOP size for encoding at least the first video frame and the second video frame includes maintaining the first GOP size recommendation, the first confidence level, the second GOP size recommendation, and the second confidence level in a buffer; and determining the GOP size based on one or more statistics determined based on the buffer.

Example 17 provides the method of any one of examples 1-16, further including in response to determining that the second video frame is a scene change frame, updating the second GOP size recommendation to 1.

Example 18 provides the method of any one of examples 1-17, further including in response to determining that a buffer has sufficient frames for the GOP size, signaling the GOP size to an encoder and flushing the buffer.

Example 19 provides one or more non-transitory computer-readable media storing instructions that, when executed by one or more processors, cause the one or more processors to: input first features associated with a first video frame into a GOP size recommendation model; in response to the GOP size recommendation model receiving the first features, receive a first GOP size recommendation and a first confidence level associated with the first GOP size recommendation; input second features associated with a second video frame into the GOP size recommendation model; in response to the GOP size recommendation model receiving the second features, receive a second GOP size recommendation and a second confidence level associated with the second GOP size recommendation; and determine a GOP size for encoding at least the first video frame and the second video frame based on the first GOP size recommendation, the first confidence level, the second GOP size recommendation, and the second confidence level.

Example 20 provides the one or more non-transitory computer-readable media of example 19, where the instructions further cause the one or more processors to: signal the GOP size to an encoder.

Example 21 provides the one or more non-transitory computer-readable media of example 20, where the instructions further cause the one or more processors to: encoding, by the encoder, at least the first video frame and the second video frame according to the GOP size to generate an encoded bitstream.

Example 22 provides the one or more non-transitory computer-readable media of any one of examples 19-21, where the first GOP size recommendation specifies a number of frames between two successive reference frames.

Example 23 provides the one or more non-transitory computer-readable media of any one of examples 19-22, where the first features include first frame-features for the first video frame, and second frame-features for a third video frame that immediately precedes the first video frame.

Example 24 provides the one or more non-transitory computer-readable media of example 23, where the first features further include third frame-features for a fourth video frame that immediately precedes the third video frame.

Example 25 provides the one or more non-transitory computer-readable media of example 24, where the second features include fourth frame-features for the second video frame, and the first frame-features for the first video frame, the first video frame immediately preceding the second video frame.

Example 26 provides the one or more non-transitory computer-readable media of example 25, where the second features further include the second frame-features for the third video frame.

Example 27 provides the one or more non-transitory computer-readable media of any one of examples 19-26, where the instructions further cause the one or more processors to: process, by a plurality of models, the first features; and output, by the plurality of models, a plurality of GOP size recommendation votes.

Example 28 provides the one or more non-transitory computer-readable media of example 27, where the instructions further cause the one or more processors to: accumulate the plurality of GOP size recommendation votes into GOP size bins; and output a GOP size corresponding to a GOP size bin with a highest number of GOP size recommendation votes as the first GOP size recommendation.

Example 29 provides the one or more non-transitory computer-readable media of example 28, where the instructions further cause the one or more processors to: output a count corresponding to the GOP size bin with the highest number of GOP size recommendation votes as the first confidence level.

Example 30 provides the one or more non-transitory computer-readable media of any one of examples 27-29, where the plurality of models includes a plurality of decision trees, each decision tree producing one of at least five potential GOP size recommendations.

Example 31 provides the one or more non-transitory computer-readable media of any one of examples 19-30, where determining the GOP size for encoding at least the first video frame and the second video frame includes determining a weighted average of GOP size recommendations having at least the first GOP size recommendation and the second GOP size recommendation; and using the weighted average as the GOP size.

Example 32 provides the one or more non-transitory computer-readable media of example 31, where GOP size recommendations corresponding to smaller GOP sizes are weighted higher than GOP size recommendations corresponding to larger GOP sizes when determining the weighted average.

Example 33 provides the one or more non-transitory computer-readable media of example 31 or 32, where GOP size recommendations having higher confidence levels are weighted higher than GOP size recommendations having lower confidence levels when determining the weighted average.

Example 34 provides the one or more non-transitory computer-readable media of any one of examples 19-33, where determining the GOP size for encoding at least the first video frame and the second video frame includes maintaining the first GOP size recommendation, the first confidence level, the second GOP size recommendation, and the second confidence level in a buffer; and determining the GOP size based on one or more statistics determined based on the buffer.

Example 35 provides the one or more non-transitory computer-readable media of any one of examples 19-34, where the instructions further cause the one or more processors to: in response to determining that the second video frame is a scene change frame, update the second GOP size recommendation to 1.

Example 36 provides the one or more non-transitory computer-readable media of any one of examples 19-35, where the instructions further cause the one or more processors to: in response to determining that a buffer has sufficient frames for the GOP size, signal the GOP size to an encoder and flushing the buffer.

Example 37 provides a system, including one or more processors; and one or more non-transitory computer-readable media storing instructions that, when executed by the one or more processors, cause the one or more processors to: input first features associated with a first video frame into a GOP size recommendation model; in response to the GOP size recommendation model receiving the first features, receive a first GOP size recommendation and a first confidence level associated with the first GOP size recommendation; input second features associated with a second video frame into the GOP size recommendation model; in response to the GOP size recommendation model receiving the second features, receive a second GOP size recommendation and a second confidence level associated with the second GOP size recommendation; and determine a GOP size for encoding at least the first video frame and the second video frame based on the first GOP size recommendation, the first confidence level, the second GOP size recommendation, and the second confidence level.

Example 38 provides the system of example 37, where the instructions further cause the one or more processors to: signal the GOP size to an encoder.

Example 39 provides the system of example 38, where the instructions further cause the one or more processors to: encoding, by the encoder, at least the first video frame and the second video frame according to the GOP size to generate an encoded bitstream.

Example 40 provides the system of any one of examples 37-39, where the first GOP size recommendation specifies a number of frames between two successive reference frames.

Example 41 provides the system of any one of examples 37-40, where the first features include first frame-features for the first video frame, and second frame-features for a third video frame that immediately precedes the first video frame.

Example 42 provides the system of example 41, where the first features further include third frame-features for a fourth video frame that immediately precedes the third video frame.

Example 43 provides the system of example 42, where the second features include fourth frame-features for the second video frame, and the first frame-features for the first video frame, the first video frame immediately preceding the second video frame.

Example 44 provides the system of example 43, where the second features further include the second frame-features for the third video frame.

Example 45 provides the system of any one of examples 37-44, where the instructions further cause the one or more processors to: process, by a plurality of models, the first features; and output, by the plurality of models, a plurality of GOP size recommendation votes.

Example 46 provides the system of example 45, where the instructions further cause the one or more processors to: accumulate the plurality of GOP size recommendation votes into GOP size bins; and output a GOP size corresponding to a GOP size bin with a highest number of GOP size recommendation votes as the first GOP size recommendation.

Example 47 provides the system of example 46, where the instructions further cause the one or more processors to: output a count corresponding to the GOP size bin with the highest number of GOP size recommendation votes as the first confidence level.

Example 48 provides the system of any one of examples 45-47, where the plurality of models includes a plurality of decision trees, each decision tree producing one of at least five potential GOP size recommendations.

Example 49 provides the system of any one of examples 37-48, where determining the GOP size for encoding at least the first video frame and the second video frame includes determining a weighted average of GOP size recommendations having at least the first GOP size recommendation and the second GOP size recommendation; and using the weighted average as the GOP size.

Example 50 provides the system of example 49, where GOP size recommendations corresponding to smaller GOP sizes are weighted higher than GOP size recommendations corresponding to larger GOP sizes when determining the weighted average.

Example 51 provides the system of example 49 or 50, where GOP size recommendations having higher confidence levels are weighted higher than GOP size recommendations having lower confidence levels when determining the weighted average.

Example 52 provides the system of any one of examples 37-51, where determining the GOP size for encoding at least the first video frame and the second video frame includes maintaining the first GOP size recommendation, the first confidence level, the second GOP size recommendation, and the second confidence level in a buffer; and determining the GOP size based on one or more statistics determined based on the buffer.

Example 53 provides the system of any one of examples 37-52, where the instructions further cause the one or more processors to: in response to determining that the second video frame is a scene change frame, update the second GOP size recommendation to 1.

Example 54 provides the system of any one of examples 37-53, where the instructions further cause the one or more processors to: in response to determining that a buffer has sufficient frames for the GOP size, signal the GOP size to an encoder and flushing the buffer.

Example A provides an apparatus comprising means to carry out or means for carrying out any one of the methods provided in examples 1-18 and methods/processes described herein.

Example B provides an encoder system to generate an encoded bitstream comprising encoder 102, pre-encoder 290, and GOP size recommendation engine 292 as described herein.

Example C provides an encoder system to perform any one of the methods provided in examples 1-18 and methods/processes described herein.

Example D provides GOP size recommendation engine 292 as described herein.

Example E provides GOP size recommendation model 702 as described herein.

Example F provides GOP size assignment 708 as described herein.

*Variations and other notes*

Although the operations of the example method shown in and described with reference to FIGS. 12-13 are illustrated as occurring once each and in a particular order, it will be recognized that some operations may be performed in any suitable order and repeated as desired. Furthermore, the operations illustrated in FIGS. 12-13 or other FIGS. may be combined or may include more or fewer details than described.

The various implementations described herein may refer to artificial intelligence, machine learning, and deep learning. Deep learning may be a subset of machine learning. Machine learning may be a subset of artificial intelligence. In cases where a deep learning model is mentioned, if suitable for a particular application, a machine learning model may be used instead. In cases where a deep learning model is mentioned, if suitable for a particular application, a digital signal processing system may be used instead.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

For the purposes of the present disclosure, "A is less than or equal to a first threshold" is equivalent to "A is less than a second threshold" provided that the first threshold and the second thresholds are set in a manner so that both statements result in the same logical outcome for any value of A. For the purposes of the present disclosure, "B is greater than a first threshold" is equivalent to "B is greater than or equal to a second threshold" provided that the first threshold and the second thresholds are set in a manner so that both statements result in the same logical outcome for any value of B.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

**Claims**

1. A method, comprising:

   inputting first features associated with a first video frame into a group of pictures (GOP) size recommendation model;
   in response to the GOP size recommendation model receiving the first features, receiving a first GOP size recommendation and a first confidence level associated with the first GOP size recommendation;
   inputting second features associated with a second video frame into the GOP size recommendation model;
   in response to the GOP size recommendation model receiving the second features, receiving a second GOP size recommendation and a second confidence level associated with the second GOP size recommendation; and
   determining a GOP size for encoding at least the first video frame and the second video frame based on the first GOP size recommendation, the first confidence level, the second GOP size recommendation, and the second confidence level.

2. The method of claim 1, wherein the first GOP size recommendation specifies a number of frames between two successive reference frames.

3. The method of claim 1 or 2, wherein:

   the first features comprise first frame-features for the first video frame, second frame-features for a third video frame that immediately precedes the first video frame, and third frame-features for a fourth video frame that immediately precedes the third video frame; and
   the second features comprise fourth frame-features for the second video frame, the first frame-features for the first video frame, and the second frame-features for the third video frame, the first video frame immediately preceding the second video frame.

4. The method of any one of claims 1-3, further comprising:

   processing, by a plurality of models, the first features; and
   outputting, by the plurality of models, a plurality of GOP size recommendation votes.

5. The method of claim 4, further comprising:

   accumulating the plurality of GOP size recommendation votes into GOP size bins; and
   outputting a GOP size corresponding to a GOP size bin with a highest number of GOP size recommendation votes as the first GOP size recommendation.

6. The method of claim 5, further comprising:
   outputting a count corresponding to the GOP size bin with the highest number of GOP size recommendation votes as the first confidence level.

7. The method of claim 4 or 5, wherein the plurality of models comprises a plurality of decision trees, each decision tree producing one of at least five potential GOP size recommendations.

8. The method of any one of claims 1-7, wherein determining the GOP size for encoding at least the first video frame and the second video frame comprises:

   determining a weighted average of GOP size recommendations having at least the first GOP size recommendation and the second GOP size recommendation; and
   using the weighted average as the GOP size.

9. The method of claim 8, wherein GOP size recommendations corresponding to smaller GOP sizes are weighted higher than GOP size recommendations corresponding to larger GOP sizes when determining the weighted average.

10. The method of claim 8 or 9, wherein GOP size recommendations having higher confidence levels are weighted higher than GOP size recommendations having lower confidence levels when determining the weighted average.

11. The method of any one of claims 1-10, wherein determining the GOP size for encoding at least the first video frame and the second video frame comprises:

   maintaining the first GOP size recommendation, the first confidence level, the second GOP size recommendation, and the second confidence level in a buffer; and
   determining the GOP size based on one or more statistics determined based on the buffer.

12. One or more non-transitory computer-readable media storing instructions that, when executed by one or more processors, cause the one or more processors to perform a method according to any one of claims 1-10

13. A system, comprising:

   one or more processors; and
   one or more non-transitory computer-readable media storing instructions that, when executed by the one or more processors, cause the one or more processors to perform a method according to any one of claims 1-10

14. An apparatus comprising means for performing a method according to any one of claims 1-11.

ENCODING SYSTEM 130

VIDEO FRAMES 104

ENCODER 102

ENCODED BITSTREAM 180 (e.g., 0 1 0 1 1 0...)

NETWORK 140

ENCODED BITSTREAM 180 (e.g., 0 1 0 1 1 0...)

DECODER 1 162₁

DISPLAY DEVICE 1 164₁

168₁

DECODING SYSTEM 1 150₁

DECODER 2 162₂

DISPLAY DEVICE 2 164₂

168₂

DECODING SYSTEM 2 150₂

DECODER D 162_D

DISPLAY DEVICE D 164_D

168_D

DECODING SYSTEM D 150_D

FIG. 1

FIG. 2

ENCODED
BITSTREAM 180
(e.g., 0 1 0 1 1 0...)

QUANTIZED
TRANSFORM COEFFICIENTS AND
SYNTAX ELEMENTS 278

ENTROPY DECODING
302

INVERSE TRANSFORM
AND INVERSE
QUANTIZATION 218

PREDICTED
SAMPLES
212

RECONSTRUCTED
PREDICTED
RESIDUES 224

MODE
SELECTION
230

222

INTRA-
PREDICTION 238

RECONSTRUCTED
PREDICTED
SAMPLES 226

DECODED
VIDEO
168₁

INTER-
PREDICTION 236

IN-LOOP FILTER
228

DECODED
PICTURE
BUFFER 232

DECODER 1 162₁

FIG. 3

FIG. 4

EP 4 672 744 A1

FIRST SEGMENT <u>502</u>

...

SECOND SEGMENT <u>504</u>

...

FIG. 5

FIG. 6

VIDEO FRAMES 104

PRE-ENCODER 290

FEATURES 296 (CURRENT FRAME + 2 PREVIOUS FRAMES)

GOP SIZE RECOMMENDATION ENGINE 290

GOP SIZE RECOMMENDATION MODEL 702

GOP SIZE RECOMMENDATION 706

GOP SIZE ASSIGNMENT 708

GS 294

ENCODER 102

ENCODED BITSTREAM 180 (e.g., 0 1 0 1 1 0...)

FIG. 7

FEATURES 296
(CURRENT FRAME +
2 PREVIOUS
FRAMES)

GOP SIZE RECOMMENDATION MODEL 702

802

MODEL 1    MODEL 2    ...    MODEL X

GOP SIZE
RECOMMENDATION
VOTES 888

VOTES ACCUMULATOR 804

HISTOGRAM 860

CLASSIFICATION 806

GOP SIZE
RECOMMENDATION
706

FIG. 8

TRAINING SYSTEM 900

FIG. 9

GOP SIZE
RECOMMENDATION 706

GOP SIZE ASSIGNMENT 708

OFFLINE ASSIGNMENT 1096

GOP SIZE
RECOMMENDATIONS
FOR A SHOT 1002

GOP SIZE
RECOMMENDATIONS
FOR A SEGMENT 1004

GOP SIZE
RECOMMENDATIONS
FOR A SEQUENCE 1006

WEIGHTED AVERAGE 1062

GS 294

FIG. 10

GOP SIZE
RECOMMENDATION 706

GOP SIZE ASSIGNMENT 708

CURRENT GOP SIZE
RECOMMENDATION 1102

ON-THE-FLY ASSIGNMENT 1106

GOP SIZE
COMPLETION
HANDLING 1120

SCENE CHANGE
HANDLING 1140

BUFFER 1104

GOP SIZE
RECOMMENDATION
VARIABILITY
HANDLING 1130

GS 294

# FIG. 11

1200

```
GET GOPSIZE
RECOMMENDA-
TION AND
FRAME
METADATA 1202
```
→
```
CALCULATE
CUR_AVG AND
CUR_MED FOR
BUFFER 1204
```

1252

**IS LAST FRAME?** N / Y

IS SCENE CHANGE? — 1254 — N / Y

```
ASSIGN GOP
SIZE 1 TO
LAST FRAME
IN BUFFER
AND SIGNAL
SCENE
CHANGE 1206
```
→
```
BREAK
BUFFER
INTO VALID
GOP SIZES
AND
ASSIGN
1208
```

1256

CUR_AVG = CUR_MED? Y / N

1258

PREV_AVG > CUR_MED? N / Y
```
CALCULATE
AVG_CONF PER
GOP BIN 1212
```

```
SET LAST FRAME
GOP SIZE =
PREV_AVG 1210
```

1260

CUR_AVG_CONF > 90% & CUR_AVG_CONF > PREV_AVG_CONF? N / Y
```
BREAK
(BUFFER-1)
INTO VALID
GOP SIZES
AND ASSIGN
1214
```

1262

BUFFER SIZE >= CUR_AVG Y / N
```
SIGNAL CALCULATED GOP
SIZES TO ENCODER 1216
```

1266

MORE FRAMES? Y / N

```
FLUSH BUFFER 1218
```

END

FIG. 12

1300

INPUT FIRST FEATURES ASSOCIATED WITH A FIRST VIDEO FRAME INTO A GOP SIZE RECOMMENDATION MODEL 1302

RECEIVE A FIRST GOP SIZE RECOMMENDATION AND A FIRST CONFIDENCE LEVEL 1304

INPUT SECOND FEATURES ASSOCIATED WITH A SECOND VIDEO FRAME INTO THE GOP SIZE RECOMMENDATION MODEL 1306

RECEIVE A SECOND GOP SIZE RECOMMENDATION AND A SECOND CONFIDENCE LEVEL 1308

DETERMINE A GOP SIZE FOR ENCODING AT LEAST THE FIRST VIDEO FRAME AND THE SECOND VIDEO FRAME BASED ON THE FIRST GOP SIZE RECOMMENDATION, THE FIRST CONFIDENCE LEVEL, THE SECOND GOP SIZE RECOMMENDATION, AND THE SECOND CONFIDENCE LEVEL 1310

# FIG. 13

COMPUTING DEVICE 1400

MEMORY 1404

104   180

102

GOP SIZE
RECOMMENDATION
MODEL 702

PRE-ENCODER
290

GOP SIZE
RECOMMENDATION
ENGINE 292

TRAINING
SYSTEM 900

1200

1300

PROCESSING DEVICE
1402

ANTENNA 1422

COMMUNICATION DEVICE
1412

DISPLAY DEVICE
1406

GPS DEVICE
1416

POWER
SOURCE /
POWER
CIRCUITRY
1414

AUDIO OUTPUT DEVICE
1408

AUDIO INPUT DEVICE
1418

OTHER OUTPUT DEVICE
1410

OTHER INPUT DEVICE
1420

SENSOR
1430

FIG. 14

**EUROPEAN SEARCH REPORT**

Application Number

EP 25 17 4693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THI HUONG THAO NGUYEN ET AL: "Artificial Intelligence Based Adaptive GOP Size Selection for Effective Wyner-Ziv Video Coding", 2018 INTERNATIONAL CONFERENCE ON ADVANCED TECHNOLOGIES FOR COMMUNICATIONS (ATC), IEEE, 18 October 2018 (2018-10-18), pages 120-124, XP033476587, DOI: 10.1109/ATC.2018.8587573 [retrieved on 2018-12-24] * Chapters I-III * | 1,2, 12-14 | INV. H04N19/114 |
| X | LI BOHAN ET AL: "Adaptive GOP Size Decision for Multi-Pass Video Coding Based on Hidden Markov Model", ICASSP 2021 - 2021 IEEE INTERNATIONAL CONFERENCE ON ACOUSTICS, SPEECH AND SIGNAL PROCESSING (ICASSP), IEEE, 6 June 2021 (2021-06-06), pages 1575-1579, XP033954063, DOI: 10.1109/ICASSP39728.2021.9414161 [retrieved on 2021-04-22] * Chapters 2 and 3 * | 1-3, 12-14 | |
| A | LEO BREIMAN: "Random Forests", MACHINE LEARNING, KLUWER ACADEMIC PUBLISHERS-PLENUM PUBLISHERS, NE, vol. 45, no. 1, 1 October 2001 (2001-10-01), pages 5-32, XP019213368, ISSN: 1573-0565, DOI: 10.1023/A:1010933404324 * the whole document * | 4-11 | TECHNICAL FIELDS SEARCHED (IPC) H04N |
| A | CN 103 632 168 A (UNIV TIANJIN POLYTECHNIC) 12 March 2014 (2014-03-12) * the whole document * | 4-11 | |

The present search report has been drawn up for all claims

| Place of search | Date of completion of the search | Examiner |
|---|---|---|
| Munich | 7 October 2025 | Lindgren, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 4693

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2025

| Patent document cited in search report | Publication date | Patent family member(s) | Publication date |
|---|---|---|---|
| CN 103632168 A | 12-03-2014 | NONE | |